# EUROPEAN PATENT SPECIFICATION

(11) **EP 4 413 556 B1**
(45) Date of publication and mention of the grant of the patent: **16.09.2026**
(21) Application number: 22797757.6
(22) Date of filing: 04.10.2022
(51) Int. Cl.: G08G 5/22, G08G 5/26, G08G 5/53, G08G 5/56, G08G 5/72, G06F 17/17, G08G 5/55

(54) **METHOD AND FLIGHT DATA ANALYZER FOR IDENTIFYING ANOMALOUS FLIGHT DATA AND METHOD OF MAINTAINING AN AIRCRAFT**
VERFAHREN UND FLUGDATENANALYSATOR ZUR IDENTIFIZIERUNG ANOMALER FLUGDATEN UND VERFAHREN ZUR WARTUNG EINES FLUGZEUGS
PROCÉDÉ ET ANALYSEUR DE DONNÉES DE VOL POUR IDENTIFIER DES DONNÉES DE VOL ANORMALES ET PROCÉDÉ DE MAINTENANCE D'UN AÉRONEF

(30) Priority: 04.10.2021 GB 202114174
(43) Date of publication of application: 14.08.2024
(73) Proprietor: University of Malta, Msida MSD 2080 (MT)
(72) Inventor: CAMILLERI, Robert, MSD2080 (MT); VALENTINO, Gianluca, MSD2080 (MT); MUSCAT, Alan, MST3503 (MT); JASRA, Sameer Kumar, MSD2080 (MT)
(74) Representative: J A Kemp LLP
(86) International application number: PCT/EP2022/077542
(87) International publication number: WO 2023/057434

(56) References cited:
- US-A1- 2015 324 501
- US-B1- 6 480 770
- US-B1- 7 206 674
- IGOR MELNYK ET AL: "Vector Autoregressive Model-Based Anomaly Detection in Aviation Systems", JOURNAL OF AEROSPACE INFORMATION SYSTEMS, vol. 13, no. 4, 1 April 2016 (2016-04-01), pages 161 - 173, XP055701918, DOI: 10.2514/1.I010394

## Description

The present invention is directed to analyzing flight data to identify anomalous flights and to taking action based on the identification.

Modern commercial aircraft are equipped with flight data recorders (FDR) that collect and record large amounts of data during flights. Parameters such as air speed, altitude, engine temperature and time of data transmissions to air traffic control are recorded. The data is collected from a variety of sources such as sensors in the aircraft and is stored in a medium capable of surviving accidents.

This data is then analysed offline using flight data monitoring (FDM) software. Flight data monitoring plays a key role in the safety management system, particularly in identifying and assessing risks. FDM aims to enhance safety and reduce the likelihood of accidents. Current state of the art software analyses events, such as an occurrence in which a parameter recorded in the flight data exceeds a pre-determined threshold. This is then flagged by the software which leads to further investigation. In the last decade, there has been a shift from a reactive approach to a more proactive approach and all large commercial aircraft operators are required by law to have a Flight Operational Quality Audit (FOQA) or FDM program which regularly, on a daily or weekly basis, downloads the Flight Recorder data from all the aircraft in their fleet. Analysis of this data allows airplane operators to predict and manage issues more generally, ultimately enhancing airplane operations.

Analysis of the large quantities of data obtained and stored during FDM can be difficult. The analysis may therefore use only a small subset of the available data or recorded parameters. The analysis may also rely on predetermined thresholds for parameters to indicate that a problem has occurred on a flight, and may only review such events within a single flight. Performing an analysis in this way relies on predetermined knowledge of what parameter values may lead to an accident or other issue and also is restricted only to circumstances known to result in an accident.

Known prior art includes US 2015/324501 A1 (which describes analyzing flight data using predictive models), Igor Melnyk et al: "Vector Autoregressive Model-Based Anomaly Detection in Aviation systems", vol. 13, no. 4, 1 April 2016, pages 161 - 173 and US 7206674 B1 (which describes an information display system for atypical flight phase).

It is an aim of the present invention to improve analysis of flight data.

According to the present invention there is provided a computer implemented method of identifying anomalous flight data as defined by the appended independent claim 1.

The above method allows large amounts of flight data to be analyzed simultaneously and efficiently. Anomalies can be identified with high sensitivity and reliability without the need for predetermined thresholds for particular parameters.

The use of the local outlier factor (LOF) algorithm makes it possible to quantify how far a data point is from normal data points rather than merely identifying whether or not a data point belongs to a cluster. The quantitative information may be used to tune a sensitivity of the method for detecting anomalous flight data units, for example to increase sensitivity in situations where false positives can be tolerated or to decrease sensitivity to reduce the number of false positives. The quantitative information may be used to support investigation into why flight data units are anomalous, such as to determine a cause of unusual flight behaviour.

In an arrangement, the LOF algorithm is used to calculate an outlier score for each of the plurality of flight data units. The flight data unit may be identified as anomalous when the outlier score of the flight data unit derived by the LOF algorithm deviates from a normal value by more than a predetermined value. The LOF algorithm may be configured to determine a spatial variation of a local density of the data points in the multi-dimensional space. The outlier score may be calculated for each flight data unit based on a position of the data point corresponding to the flight data unit relative to the determined spatial variation of local density. The degree to which a data point is in a sparse region of the parameter space may be quantified by the outlier score. This may provide quantitative information about how anomalous a flight data unit is. A level of anomaly of a flight may be monitored as a function of time by calculating LOF scores as a function of time. This may make it possible to identify when a flight becomes anomalous without requiring a human expert to analyze a huge data set after a flight as a whole has been identified as anomalous or after an accident has occurred.

In an arrangement, the predetermined value is calculated based on a statistical distribution of the calculated outlier scores. This approach promotes efficient interpretation of the outlier scores by enabling a sensitivity of the method to be adjusted automatically in way that allows appropriate distinction to be made between normal flight data units and truly anomalous flight data units.

In an arrangement, the predetermined value is calculated such that outlier scores higher than a calculated threshold are identified as anomalous, the calculated threshold being equal to the sum of a value of a predetermined percentile of the distribution and a predetermined percentile range multiplied by a predetermined factor. This approach is robust against extreme values in the data because it relies on a percentile and a percentile range that can both be away from the extremes. The predetermined percentile may be a first quartile or a third quartile for example. The predetermined percentile range may be the interquartile range. The predetermined factor may be in range of 1 to 2, optionally substantially equal 1.5.

In an arrangement, the determination of the spatial variation of the local density of the data points is performed based on distances between data points and nearest neighbours of the data points. The distances may be determined using the Manhattan distance. Using the Manhattan distance may reduce the computational load and therefore increase the efficiency of the analysis of large quantities of data.

In some arrangements, the method comprises comprising calculating an average outlier score of at least one of the following phases of at least one of the plurality of flights: take-off, initial climb, cruise, approach, descent or landing, wherein the average outlier score is calculated using the outlier score of each of the flight data units recorded at a time point falling within the said phase, wherein for each phase of the flight, that phase is identified as anomalous when the average outlier score of the said phase deviates from a normal value by more than a predetermined value.

Determining a particular phase of a flight as anomalous in this way may allow a particular phase to be identified as anomalous even when the behaviour of the aircraft at each time step within the phase would not have previously been recognized as anomalous, for example because individual parameter thresholds have not been exceeded. The method may therefore identify anomalous behaviour that would not have previously been recognized, reducing the potential for accidents and increasing the efficiency of aircraft operation.

The method may further comprise the step of calculating an average outlier score of the group of flight data units corresponding to at least one of the plurality of different flights; and the at least one of the plurality of different flights may be identified as anomalous when the average outlier score of said flight deviates from a normal value by more than a predetermined value.

Determining a particular flight as anomalous in this way may allow a particular flight to be identified as anomalous even when the behaviour of the aircraft at each time step within the flight would not have previously been recognized as anomalous. The method may therefore identify anomalous behaviour that would not have previously been recognized, reducing the potential for accidents and increasing the efficiency of aircraft operation.

The local outlier factor algorithm may be applied a plurality of times using a plurality of different values of k. A value of k that achieves higher than average or maximal outlier scores may be selected. The selected value of k may be used to perform the identifying of the one or more anomalous flight data units.

Deriving the k-value to be used for the identification of anomalies in this way may further increase the performance of method. In particular, the literature relating to local outlier factor algorithms suggests merely that k should normally be more than 10. However, a value of *k* that is above 10 but still relatively small would make the algorithm susceptible to noise while a value of *k* that is too large will not detect local anomalies. There cannot be one definite value for *k* in finding the anomalous flights as each dataset will be unique in number of total flights (samples) and number of flight parameters. As a consequence there are no predefined statistical methods to find the most optimal value of *k.* However, by calculating the outlier scores for many different values of *k,* for example across an entire fleet, the inventors have found that it is possible to find advantageous or optimal k values.

The method may be performed at a ground location.

Performing the analysis at a ground location may allow the method to be performed more often and therefore increase the speed at which anomalies are identified while avoiding the increased use of computing resources on the aircraft during a flight.

According to an aspect of the present disclosure, there is provided a method of maintaining an aircraft as defined by the appended claim 12.

According to an aspect of the present disclosure, there is provided a flight data analyzer as defined by the appended independent claim 13.

According to an aspect of the present disclosure, there is provided a computer program as defined by the appended independent claim 14.

According to an aspect of the present disclosure, there is provided a computer-readable storage medium as defined by the appended independent claim 15.

Embodiments will now be described by way of example only, with reference to the figures in which:
Figure 1 is a flowchart showing an example of the steps performed to identify anomalous flight data;
Figure 2 is a diagram showing an example of local outlier factor analysis;
Figure 3 is a graph showing LOF scores assigned to a plurality of flights;
Figure 4 shows graphs indicating LOF scores of a plurality of flight data units of an anomalous phase of first flight and a non-anomalous phase of a second flight with respect to time;
Figure 5 shows graphs indicating the altitude of the aircraft of the flights shown in figure 3 with respect to time;
Figure 6 shows graphs indicating the airbrake position of the aircraft of the flights shown in Figure 3 with respect to time;
Figure 7 shows graphs indicating the power lever angle of an engine of the aircraft of the flights shown in Figure 3 with respect to time;
Figure 8 is an example of a flight data analyzer;
Figure 9 is a graph showing maximum LOF scores obtained in an example implementation for all considered flights at Minneapolis airport for different values of k;
Figure 10 is a graph depicting optimal value of k plotted against number of flights for three different airports (DTW = Detroit; MEM = Memphis; MSP = Minneapolis);
Figure 11 is a graph illustrating example determination of a LOF threshold using Tukey's method;
Figure 12 is graph depicting threshold analyses for three airports;
Figure 13 are graphs showing LOF scores (y-axes) for different fleets of flights (x-axes) for three different airports (top to bottom);
Figure 14 is a graph showing boxplots for three different airports showing outliers identified using a statistically derived LOF score threshold (deriving using Tukey's method);
Figures 15 and 16 depict variation with flight time of the top 10 flight parameters responsible for an anomalous flight during the last 3 minutes before touchdown; and
Figure 17 is a graph showing how a LOF score of a flight changes over time during the last 3 minutes before touchdown.

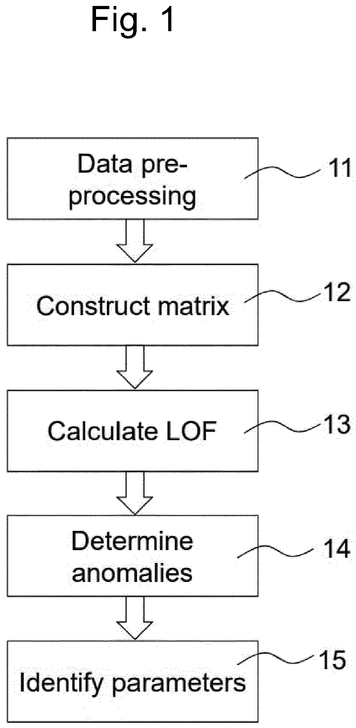

Figure 1 shows an example of steps in a method to identify anomalous flight data. The method comprises receiving flight data. In the example shown, the flight data is received in step 11. The flight data may comprise a plurality of flight data units. Each flight data unit may comprise flight data obtained at a single time point in time.

Each flight data unit is associated with a particular point in time during a flight path of a flight performed by the aircraft associated with the flight data unit. A plurality of flight data units may be obtained at a corresponding plurality of different time points during the flight. The plurality of flight data units obtained during the flight therefore comprises time series data.

The time point is recorded together with the flight data in the flight data unit. The time point may be recorded with respect to a reference time point in the flight path of the flight. The reference time point may be associated with a "beginning" of the flight. The first flight data unit of a flight may thus be recorded with a time value of 0. Each subsequent flight data unit associated with that flight may be assigned a time value based on the time that has passed since the first flight data unit was recorded. In some arrangements, the reference time point associated with the beginning of the flight may be defined as one of the following: when an aircraft control system is powered on; when the pilots assume control of the aircraft; when all of the passengers have boarded the aircraft; when the aircraft moves away from the departure gate; when the aircraft begins accelerating down the runaway during take-off; and when the aircraft becomes airborne.

The plurality of flight data units may comprise flight data units corresponding to one or more phases of the flight. The transition from one phase of a flight to another phase of a flight may be defined by a characteristic feature of one of the phases. In an arrangement, a flight parameter reaching a threshold value may be a characteristic feature. For example, the transition from one phase of a flight to another phase of a flight may take place when the flight reaches a threshold value in at least one of altitude, engine power or climb/decent rate. A flight may be divided into at least the take-off, initial climb, cruise, approach, descent and landing phase. Flight data units correspond to a phase of a flight when the time point associated with the flight data unit falls within the phase of the flight. The reference time point may be defined relative to a characteristic feature of one of the phases of the flight. The reference time point may be defined as the beginning or the end of one of the phases of the flight.

In some arrangements, the time series data are recorded with a constant time step. In an alternative arrangement, at least one flight parameter may be recorded at a different rate. In this case, preprocessing of the time series data may be performed to synchronize the sampling rate of each of the flight parameters. The flight data units may be sampled at a constant rate. For example, the flight data units may be sampled at a rate of 16Hz. In some arrangements, the time series nature of the flight data is maintained throughout the analysis of the data described below. For example, the flight data may processed by the method without combining or averaging the flight data.

The received flight data comprises a plurality of flight data units in a time series from each of a plurality of different flights. The plurality of flight data units may comprise flight data units corresponding to multiple instances of a particular flight path. The multiple instances may comprise repeated flights between two destinations. The repeated flights may be performed by the same aircraft or a plurality of aircraft of the same type. The time series of the flight data units of each of the flights are synchronized in the preprocessing of the time series data. This means that the time point of each flight data unit is defined relative to a common reference time point in the flight paths of the plurality of flights. The preprocessing thus comprises synchronizing the flight data units such that flight data units having the same time point from different flights will correspond to the same portion of each flight.

Each flight data unit comprises values of a plurality of flight parameters. Flight parameters are parameters associated with the aircraft for which the flight data is being recorded. Flight data associated with a flight parameter is recorded as a numerical value of the flight parameter. Examples of flight parameters are parameters related to the position of the aircraft, such as latitude, longitude and altitude. Further examples are parameters related to the orientation of the aircraft, such as pitch and yaw. Further examples are parameters associated with specific components of the aircraft such as the engines, rudder, flaps or landing gear. For example, engine temperature is a flight parameter associated with the engines. When an aircraft has more than one of a component, separate flight data may be recorded for each of the components. For example, engine temperature may be recorded separately for each of the two, three, four or more engines of the aircraft. The table provided at the end of this description includes examples of a number of flight parameters that may be recorded as flight data in flight data units.

During the first step 11, pre-processing may be performed on the flight data. Pre-processing is any processing performed on the flight data before the grouping analysis discussed in more detail below is performed. For example, the flight data may be analysed to determine if any flight data is missing. In an arrangement, missing flight units may be identified based on the absence of flight data associated with particular time steps. In an arrangement, if missing flight data is identified, the flight data recorded by the flight data monitoring system may be checked to determine if the missing flight data was not received due to an error when retrieving the flight data from the FDM system. Pre-processing may include removal of data from the flight data. For example, any data that does not relate to a time step or a flight parameter may be removed from the flight data. Pre-processing may include normalization of the data associated with the flight parameters. However, during the pre-processing step, relative proportions of the values of the flight data associated with each of the flight parameters is maintained. This means that the further steps of the method described below are performed on flight data values that are directly proportional to the flight data values received from the FDM system. For example, the flight data associated with each flight parameter is not averaged over a number of time steps. The flight data associated with each flight parameter is not converted into a different value that is not directly associated with a flight parameter before further analysis is performed.

In a second step 12, the flight data units from each of a plurality of different flights are mapped as respective data units onto a multi-dimensional space. In an arrangement, the flight data units are assembled into a flight data matrix. Each flight parameter corresponds to a column or row of the flight data matrix. The flight data matrix therefore represents a multi-dimensional space where each flight parameter corresponds to a dimension of the multi-dimensional space. In an arrangement, the time point of each flight data unit is also included in the flight data matrix. The multi-dimensional space therefore may further comprise a time dimension that represents the time series of each plurality of flight data units.

In a third step 13, a grouping analysis is performed on the flight data matrix or plurality of flight data matrices. When the grouping analysis is performed on the plurality of flight data matrices, the grouping analysis is performed separately on each flight data matrix. In this arrangement, the grouping analysis compares each of the flight data units with one or more flight data units from other flights recorded at a corresponding time point or time window in those flights. The time point or time window is defined relative to the reference time point in the respective flight path. The time window may include flight data units recorded at adjacent time points to the corresponding time point in the other flights.

An example of a grouping analysis that may be performed is the application of a local outlier factor (LOF) algorithm. The LOF algorithm may, for example, take any of the forms described in Breunig, M., Kriegel, H., Ng, R., & Sander, J. (2000). LOF. Proceedings of The 2000 ACM SIGMOD International Conference On Management Of Data - SIGMOD '00."

A LOF algorithm is a method which identifies outliers in a dataset that has been mapped to a space and the dataset is therefore represented by points in the space. In arrangements of the present disclosure, the flight data units are mapped to such a space and represented as points (also referred to as data points) in the space. The points in the space may be analysed to determine local densities associated with the points. The LOF algorithm may thus determine a spatial variation of the local density of the data points. An outlier score (which may also be referred to as a LOF score) can be calculated for each flight data unit based on a position of the data point corresponding to the flight data unit relative to the determined spatial variation of local density. The outlier score provides information about the degree to which a data point appears anomalous. The outlier score therefore supports identification of anomalous flight data units. For example, the outlier score may indicate that data points in relatively sparse regions are more likely to be anomalous than data points in denser regions of the space.

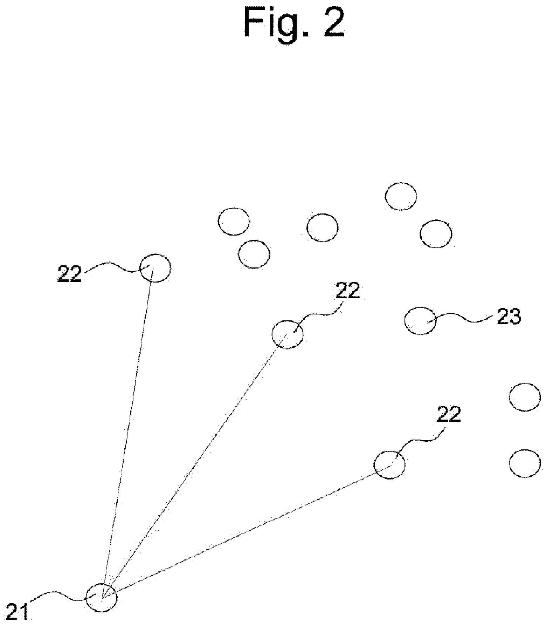

The concept of local density is illustrated in Figure 2. A number of points 21, 22, 23 are mapped to a space. The local density of a point 21 is determined in this example by considering the closest neighbouring points 22 which are defined as the k Nearest Neighbours (kNN) points 22.

The number of closest neighbouring points k that are considered may vary. A value of k (or k-value) of greater than 10 is preferable. When applying a LOF algorithm to flight data as described herein, the LOF algorithm may be applied multiple times using different k-values and a preferable k-value selected for further analysis, as discussed in greater detail below.

Calculating the distance between a point 21 and its kNN points 22 allows the local density in the region of the point 21 to be estimated. More distant points 23 are not considered. The local density of the point 21 is then compared with local densities of the neighbouring points 22. If the point 21 has a lower local density than its neighbours, it may be identified as being an outlier. In Figure 2, the point 21 has a much lower density than its neighbours 22. Therefore, point 21 is an outlier as compared with its three nearest neighbours.

As mentioned above, the outlier score (e.g., LOF score) may be calculated for each flight data unit based on a position of the data point corresponding to the flight data unit relative to the determined spatial variation of local density. The determination of the spatial variation of the local density may be performed based on the distances between data points and nearest neighbours of the data points. The local density of each data point may be defined using at least a distance between the data point and a k-th nearest neighbour of the data point. In preferred arrangements, each distance is calculated as a Manhattan distance but other approaches (e.g., Euclidean distance) may be used.

In an arrangement, the local density of each data point is defined as a local reachability density according to the following formula: ${LRD}_{k} \left(A\right) = 1 / \left(\frac{{\sum }_{B ∈ {N}_{k} \left(A\right)} reach {distance}_{k} \left(A, B\right)}{\left|{N}_{k}\left(A\right)\right|}\right)$ where
*LRDₖ*(*A*) is the local reachability density of a data point *A* for a given value of *k;*
*reach distanceₖ*(*A, B)* is the reachability distance of data point *A* from data point B, defined as *reach distanceₖ*(*A, B) = max*{*k-distance*(*B*), *d(A, B)}, k-distance*(*B*) being the distance from the data point *B* to the k-th nearest neighbour of *B,* and *d*(*A, B*) being the distance between data points *A* and *B;*
Σ_{*B*∈*Nk*}(*A*) *reach distanceₖ*(*A, B)* is the sum of the *reach distanceₖ*(*A, B*) over all data points *B* that are equidistant or closer to the data point A than the k-th nearest neighbour of *A*; and
|*Nₖ*(*A*)| is the number of data points that are equidistant or closer to the data point *A* than the k-th nearest neighbour of *A.*

The outlier score for each data point may be calculated by mathematically comparing the local reachability density of the data point with the local reachability density of a group of neighbouring data points.

For example, the outlier score for a data point A for a given value of *k, LOFₖ*(*A*), may be given by the following expression: ${LOF}_{k} \left(A\right) = \frac{{\sum }_{B ∈ {N}_{k} \left(A\right)} \frac{{LRD}_{k} \left(B\right)}{{LRD}_{k} \left(A\right)}}{\left|{N}_{k}\left(A\right)\right|} = \frac{{\sum }_{B ∈ {N}_{k} \left(A\right)} {LRD}_{k} \left(B\right)}{\left|{N}_{k}\left(A\right)\right| ∗ {LRD}_{k} \left(A\right)} .$

A simplified example of the application of a LOF algorithm is provided below.

In this simplified example, the flight data matrix comprises four flight data units recorded on four flights F1, F2, F3 and F4. Each flight data unit comprises three flight parameters. In this example, the three parameters are altitude, mach speed and flap setting. In this example, these parameters are represented by x, y and z respectively. In the pre-processing step, the value of each parameter is normalized to be between 0 and 1. The parameter values for each flight at a point t in time are as follows:

| | | | | |
|---|---|---|---|---|
| 1. | Flight F1: | x= 0.05437 | y=0.04587 | z=0.04879 |
| 2. | Flight F2: | x=0.53982 | y=0.98243 | z=0.99654 |
| 3. | Flight F3: | x=0.06345 | y=0.05784 | z=0.06002 |
| 4. | Flight F4: | x=0.058946 | y=0.03789 | z=0.03989 |

### Step 1: Calculation of Distance Between Points

In this step, the distance between each pair of points (referred to above as *d*(*A, B*) for points *A* and *B*) in the multidimensional space is determined. In this example, the distance is calculated as the Manhattan distance between each of the pairs of points. The Manhattan distance is calculated as the sum of the absolute values of the differences of the coordinates of the two points for which the distance is being calculated. The Manhattan distance may be preferred for use in the LOF algorithm over a Euclidean distance because the calculation of the Manhattan distance requires only absolute values and does not require the squaring of values or taking of square roots. This reduces the complexity of the algorithm and therefore may be more efficient in terms of calculation time or hardware use. The Manhattan distance for each pair of example flight data units is calculated below.
1. Manhattan Distance (F1, F2) $\begin{matrix}\left|xF1-xF2\right| + \left|yF1-yF2\right| + \left|zF1-zF2\right| \\ \left|0.05437-0.53982\right| + \left|0.04587-0.98243\right| + \left|0.04879-0.99654\right| \\ \left(0.48545+0.93656+0.94775\right) = 2.36976\end{matrix}$
2. Manhattan Distance (F1, F3) $\begin{matrix}\left|xF1-xF3\right| + \left|yF1-yF3\right| + \left|zF1-zF3\right| \\ \left|0.05437-0.06345\right| + \left|0.04587-0.05784\right| + \left|0.04879-0.06002\right| \\ \left(0.00908+0.01197+0.01123\right) = 0.03228\end{matrix}$
3. Manhattan Distance (F1, F4) $\begin{matrix}\left|xF1-xF4\right| + \left|yF1-yF4\right| + \left|zF1-zF4\right| \\ \left|0.05437-0.05894\right| + \left|0.04587-0.03789\right| + \left|0.04879-0.03989\right| \\ \left(0.004576+0.00798+0.0089\right) = 0.021456\end{matrix}$
4. Manhattan Distance (F2, F3) $\begin{matrix}\left|xF2-xF3\right| + \left|yF2-yF3\right| + \left|zF2-zF3\right| \\ \left|0.53982-0.06345\right| + \left|0.98243-0.05784\right| + \left|0.99654-0.06002\right| \\ \left(0.47637+0.92459+0.93652\right) = 2.33748\end{matrix}$
5. Manhattan Distance (F2, F4) $\begin{matrix}\left|xF2-xF4\right| + \left|yF2-yF4\right| + \left|zF2-zF4\right| \\ \left|0.53982-0.05894\right| + \left|0.98243-0.03789\right| + \left|0.99654-0.03989\right| \\ \left(0.480874+0.94454+0.95665\right) = 2.382064\end{matrix}$
6. Manhattan Distance (F3, F4) $\begin{matrix}\left|xF3-xF4\right| + \left|yF3-yF4\right| + \left|zF3-zF4\right| \\ \left|0.06345-0.058946\right| + \left|0.05784-0.03789\right| + \left|0.06002-0.03989\right| \\ \left(0.004504+0.01995+0..02013\right) = 0.044584\end{matrix}$

### Step 2: Finding k^{th} Nearest Neighbor

In this example, a k value of 2 is selected. For each flight data unit a second nearest neighbor is determined based on the calculated Manhattan distance. The second nearest neighbor is the second closest point to each flight data unit. The second nearest neighbour for flight data unit F1 is F3. The second nearest neighbour for flight data unit F2 is F1. The second nearest neighbour for flight data unit F3 is F4. The second nearest neighbour for flight data unit F4 is F3.

### Step 3: Manhattan distance of each point from its k^{th} nearest neighbor

In this step, the Manhattan distance of each flight data unit to its *k^{th},* in this example second, nearest neighbor is selected. This is an example of the k-distance mentioned above with the value of k being 2. The distance of flight data unit F1 from its 2^{nd} nearest neighbour F3 is 0.03228. The distance of flight data unit F2 from its 2^{nd} nearest neighbour F1 is 2.369760. The distance of flight data unit F3 from its 2^{nd} nearest neighbour F4 is 0.044584. The distance of flight data unit F4 from its 2^{nd} nearest neighbour F3 is 0.044584.

### Step 4: k nearest neighbor set of each flight

In this step, the set of *k* nearest neighbors for each flight data unit are determined. The *k* Nearest Neighbor (*k* NN) set count (referred to above as |*Nₖ*(*A*)| for a point *A*) for each flight data unit in this example is two. The second nearest neighbor has been determined in the steps above. Therefore, the first nearest neighbor is determined to complete the set. The *k* Nearest Neighbour set of flight data unit F1 is {F4, F3} as F4 is the nearest neighbour and F3 is the second nearest neighbour. The *k* Nearest Neighbour set of flight data unit F2 is {F3, F1}. The *k* Nearest Neighbour set of flight data unit F3 is {F1, F4}. The *k* Nearest Neighbour set of flight data unit F4 is {F1, F3}.

### Step 5: Local Reachability Density (LRD) calculation for each flight data unit

In this step, the local reachability density (LRD) for each point is calculated. The LRD is the estimated distance at which a point is most likely be found from the neighboring points. The LRD is equal to the count of the items in the *k* NN set of each point over the sum of the reach distance of the point to each of the other points in its *k* Nearest Neighbor set.

For example, for flight data unit F1: $LRD \left(F1\right) = \frac{kNN set count \left(F1\right)}{reach distance \left(F4←F1\right) + reach distance \left(F3←F1\right)}$

Where the reach distance in this example is the maximum value of the *k^{th}* nearest neighbor of the point (second in this example) and the Manhattan distance between the point and its neighbor. For example: $\begin{matrix}reach distance \left(F4←F1\right) = \\ max \left\{manhattan distance to KNN of F4, manhattan distance between F1 & F4\right\} \\ reach distance \left(F4←F1\right) = max \left\{0.044584, 0.0214456\right\} \\ reach distance \left(F4←F1\right) = 0.044584\end{matrix}$ $\begin{matrix}reach distance \left(F3←F1\right) = \\ max \left\{manhattan distance to kNN of F3, manhattan distance between F1 & F3\right\} \\ reach distance \left(F3←F1\right) = max \left\{0.044584, 0.03228\right\} \\ reach distance \left(F3←F1\right) = 0.044584\end{matrix}$

Therefore, $LRD \left(F1\right) = \frac{2}{0.044584 + 0.044584} = 22.429571$

In the similar manner above, LRD (F2) can be calculated: $LRD \left(F2\right) = \frac{2}{2.33748 + 2.36976} = 0.4248774$

And LRD (F3) and LRD (F4) can both be calculated as 26.01998.

### Step 6: Local Outlier Factor (LOF) score calculation for each flight data unit

In this step, the LOF score (outlier score) of each flight data unit is calculated. The LOF score of a point may be expressed as the sum of the LRD of all the points in the set kNN of that point multiplied with the sum of the reach distance of all the points of the same set to the point, divided by the number of items in the kNN set count squared.

The LOF score for each of the flight data units is calculated as below:
1. $\begin{matrix}LOF \left(F1\right) = \frac{\left(LRD\left(F4\right)+LRD\left(F3\right)\right) \times \left(reach dist.\left(F4←F1\right)+reach dist.\left(F3←F1\right)\right)}{{2}^{2}} \\ = \frac{\left(26.01998+26.01998\right) \times \left(0.044584+0.044584\right)}{4} \\ = 1.16007\end{matrix}$
2. $\begin{matrix}LOF \left(F2\right) = \frac{\left(LRD\left(F3\right)+LRD\left(F1\right)\right) \times \left(reach dist.\left(F3←F2\right)+reach dist.\left(F1←F2\right)\right)}{{2}^{2}} \\ = \frac{\left(26.01998+22.429571\right) \times \left(2.33748+2.36976\right)}{4} \\ = 57.015916\end{matrix}$
3. $\begin{matrix}LOF \left(F3\right) = \frac{\left(LRD\left(F1\right)+LRD\left(F4\right)\right) \times \left(reach dist.\left(F1←F3\right)+reach dist.\left(F4←F3\right)\right)}{{2}^{2}} \\ = \frac{\left(22.42957+26.01998\right) \times \left(0.03228+0.044584\right)}{4} \\ = 0.931006\end{matrix}$
4. $\begin{matrix}LOF \left(F4\right) = \frac{\left(LRD\left(F1\right)+LRD\left(F3\right)\right) \times \left(reach dist.\left(F1←F4\right)+reach dist.\left(F3←F4\right)\right)}{{2}^{2}} \\ = \frac{\left(22.429571+26.01998\right) \times \left(0.03228+0.044584\right)}{4} \\ = 0.931006\end{matrix}$

Applying a LOF algorithm therefore assigns a LOF score to (i.e., calculates a LOF score for) each flight data unit. The LOF score is an example of an outlier score that may be derived for each of the plurality of flight data units.

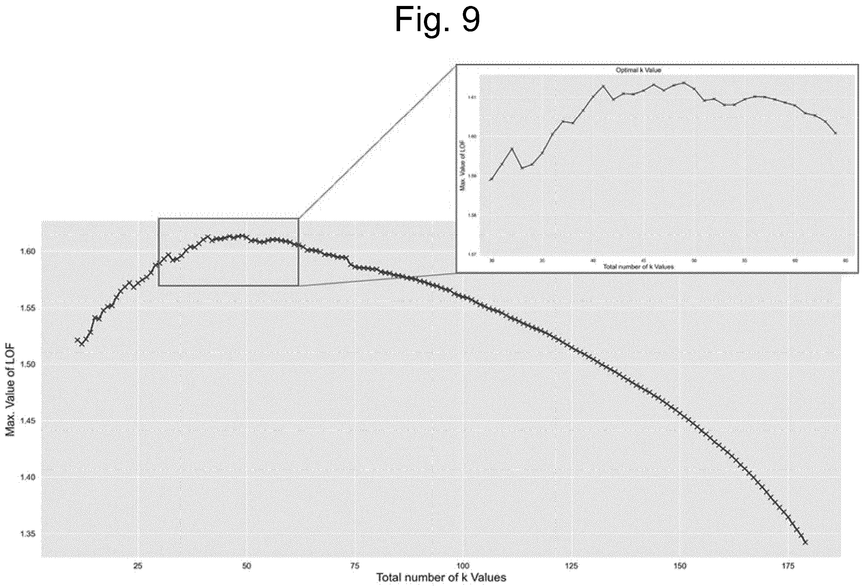

As discussed above, the LOF algorithm may be applied multiple times using a plurality of different values of k (k-values). In this case, the LOF algorithm is applied for each of the plurality of k-values and a LOF score is assigned to each flight data unit for each k-value. For example, the LOF algorithm may be applied using all k-values in a range from 10 to 180. The method may then select a value of k that achieves higher than average or maximal LOF scores and use the selected value of k to perform the identifying of the one or more anomalous flight data units. For example, where there is a set of LOF scores corresponding to each k-value used, the set of LOF scores containing the maximum LOF score of all of the sets of LOF scores may be determined and used to select the value of k. An example of this approach is described below with reference to Figure 9. The set of LOF scores corresponding to the selected k-value may be used to identify anomalous flight data units as described below. Applying the LOF algorithm multiple times for different k-values in this way, to obtain an improved or optimal k-value, may increase the sensitivity of the subsequent identification of anomalies (using the selected optimal or improved k-value), for example by reducing the number of false positive identifications.

In a fourth step 14, one or more anomalous flight data units are identified. Anomalous flight data units may be identified using the outlier score (LOF score) assigned to each flight data unit during the grouping analysis. Thus, one or more anomalous flight data units may be identified by applying the LOF algorithm to the mapped flight data units. A flight data unit may be identified as anomalous when the outlier score of said flight data unit deviates from a normal value by more than a predetermined value. The predetermined value may be a percentage of the normal value. For example, the predetermined value may be 10% or 20% of the normal value. When the grouping analysis performed is a LOF algorithm, the LOF score may be interpreted as follows. A LOF score approximately equal to one means that the local density of the point is comparable to its neighbours and thus the point is not anomalous. A LOF score of less than one means that the point has higher local density than its neighbours and thus the point is not anomalous. A LOF score greater than one by more than a predetermined value means that the point has lower local density than its neighbours by an amount significant enough for the point to be considered as anomalous. In an arrangement, the predetermined value may be 0.1 or 0.2.

In the example calculation above, it can be concluded that the flight data unit F2 is anomalous as the calculated LOF score is much greater than 1.2. The other flight data units may be classified as non-anomalous because the calculated LOF score of said flight data units is less than 1.2.

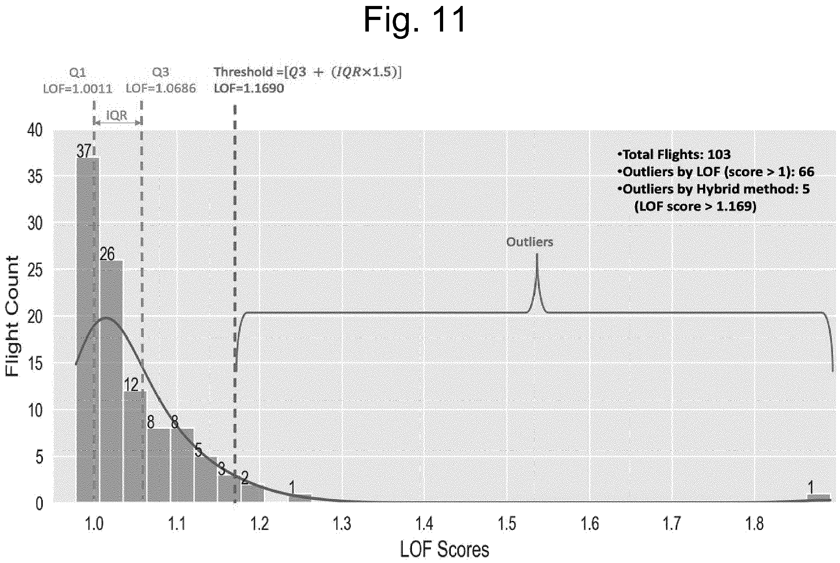

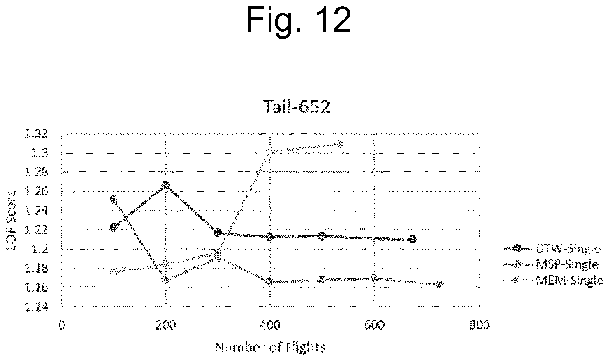

In some arrangements, the predetermined value is calculated based on a statistical distribution of the calculated outlier scores. For example, the predetermined value may be calculated such that outlier scores higher than a calculated threshold are identified as anomalous, with the calculated threshold being equal to the sum of 1) a value of a predetermined percentile of the distribution and 2) a predetermined percentile range multiplied by a predetermined factor. The predetermined percentile may be a first quartile (25^{th} percentile) or a third quartile (75^{th} percentile). The predetermined percentile range may be the interquartile range. The predetermined factor may be in the range of 1 to 2, optionally in the range of 1.2 to 1.8, optionally in the range of 1.4 to 1.6, optionally substantially equal to 1.5. Thus, in one arrangement, the calculated threshold is such that outlier scores that are more than 1.5 times the interquartile range above the third quartile are considered to correspond to anomalous flight data units. This approach makes it possible to generate an appropriate threshold for distinguishing between anomalous and non-anomalous data points in the group of data points having outlier scores that are greater than the normal value (e.g., 1) without requiring detailed manual user input. This is important because the most appropriate threshold to use may vary significantly between different sets of flight data units under consideration. For example, an optimal threshold for a set of flight data units for one type of aircraft, phase of a flight, or particular airport may be significantly different than an optimal threshold for a set of flight data units for a different type of aircraft, phase of flight, or airport. Thus, the calculated threshold may be calculated based on a statistical distribution over the calculated outlier scores of a subset of the data points, the subset of data points corresponding to a predetermined category, such as a predetermined type of aircraft, a predetermined phase of flight, or involvement of a predetermined airport. Furthermore, the optimum threshold to use may vary as a function of the size of the data set that is available (e.g., the number of relevant flight data units that have been received). The methodology may thus comprise receiving further flight data units, calculating new outlier scores corresponding to those flight data units, and updating the calculated threshold to take account of the new outlier scores. The above approach allows an appropriate threshold to be selected and/or updated quickly and reliably, with minimal user input. A particular example of the above approach for calculating a threshold is described in further detail below with reference particularly to Figures 11 and 12.

Additional information may be used in the determination of flight data units as anomalous or non-anomalous. For example, the model of the aircraft for which the flight data was recorded may be used. The value of the outlier score or the threshold value used to determine if a flight data unit is anomalous may change depending on the additional information. For example, flight data units comprising flight data recorded on a particular aircraft model may require a higher threshold value to be classified as anomalous.

In an arrangement, particular phases of the flight may be identified as anomalous. The average outlier score of all of the flight data units falling within at least one phase or set time window of a flight may be determined. The average may be any of the mean, median or modal value of the outlier scores assigned to the flight data units. The phase may be identified as anomalous when the average outlier score of the phase deviates from a normal value by more than a predetermined value as discussed above. In an arrangement, a flight may be identified as anomalous. The average outlier score of all of the flight data units falling within flight may be determined. The flight may be identified as anomalous when the average outlier score of the phase deviates from a normal value by more than a predetermined value as discussed above. phase deviates from a normal value by more than a predetermined value as discussed above.

In a fifth step 15, further analysis may be performed to determine at least one of the flight parameters as responsible for the identification of one or more flight data units as anomalous. The grouping method used to determine if particular flight data units are anomalous may not identify which flight parameters of the flight data unit are responsible for the determination. For example, the LOF algorithm described above assigns an LOF score to each flight data unit and a flight data unit may be identified as anomalous based on the LOF score. However, the LOF score does not indicate which flight parameters are responsible for the identification. Therefore, further analysis of the one or more flight data units identified as anomalous is necessary to determine the flight parameters are responsible for the identification. Deviation of a single flight parameter from a normal value may be responsible for the one or more flight data units being identified as anomalous. In an arrangement, deviation of a plurality of flight parameters from normal values may be responsible. An advantage of the method described herein is that anomalous behaviour due to deviation of a plurality of flight parameters may be identified as responsible for flight data units being identified as anomalous even if the deviation of the values of the individual flight parameters does not meet known thresholds of anomalous behaviour.

The further analysis may be performed by manual inspection of the anomalous flight data units. Alternatively or additionally, machine learning techniques may be applied to the anomalous flight data units to identify flight parameters responsible for the anomalous behaviour. Flight parameters may be identified by comparing the flight data associated with the flight parameters in the flight data units identified as anomalous with flight data in flight data units identified as non-anomalous recorded at the same time point in a different flight. A variation in the value of the flight data for the flight parameter in the anomalous flight data unit may indicate that flight parameter as responsible.

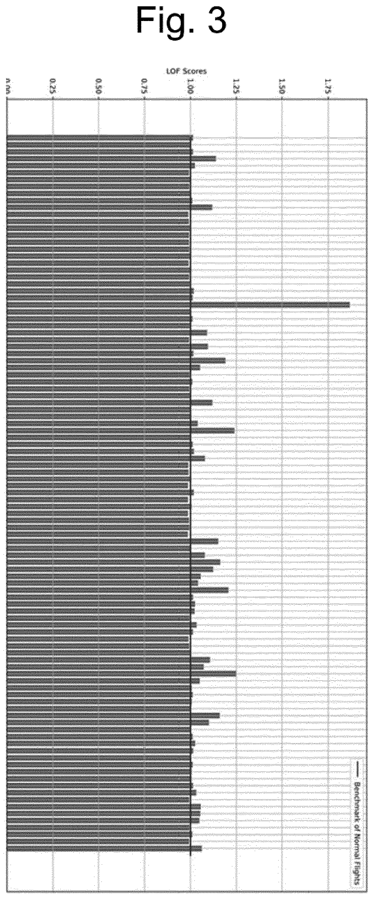

Figure 3 shows the results of the method described herein performed on a plurality of flights where an average outlier score for each flight has been obtained. In this example, the flight data units were recorded in the approach phase of the plurality of flights. In the graph of Figure 3, each flight is represented on the x-axis and the y-axis indicates the average outlier score of each flight. The majority of the approach phases of the flights have an average outlier score of less than or equal to 1.1. These approaches may therefore be determined as non-anomalous. A number of the approach phases of the flights have an average outlier score of greater than 1.1. These phases may therefore be determined as anomalous.

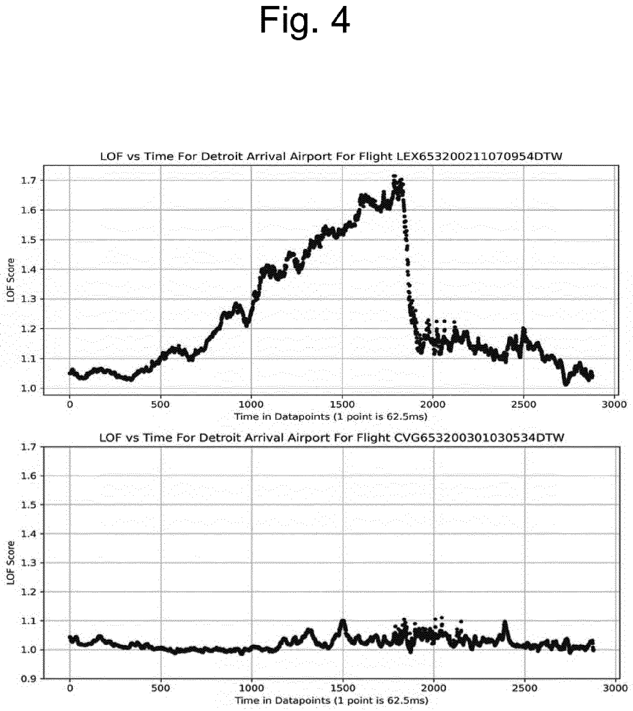

Once a phase has been determined as anomalous, further analysis may be performed as discussed above. Figure 4 shows the calculated LOF score for each flight data unit recorded in the approach phase of two flights. The top graph of Figure 4 shows the calculated LOF score for each data unit recorded in one of the anomalous phases identified in Figure 3. The bottom graph of Figure 4 shows the calculated LOF score for each data unit recorded in one of the non-anomalous phases identified in Figure 3. The trend for the anomalous phase shows that the value of the LOF score initially is non-anomalous. The value of the LOF score then beings to increase around at around the 500th flight data unit of the phase. The value of the LOF score then increases until around the 700th flight data unit of the phase. The value of the LOF score then decreases sharply before dropping to a score that is non-anomalous. In comparison, the calculated LOF score for the non-anomalous phase remains non-anomalous for almost all of the phase. This pattern in the anomalous phase suggests an anomaly developed for which corrective action was taken.

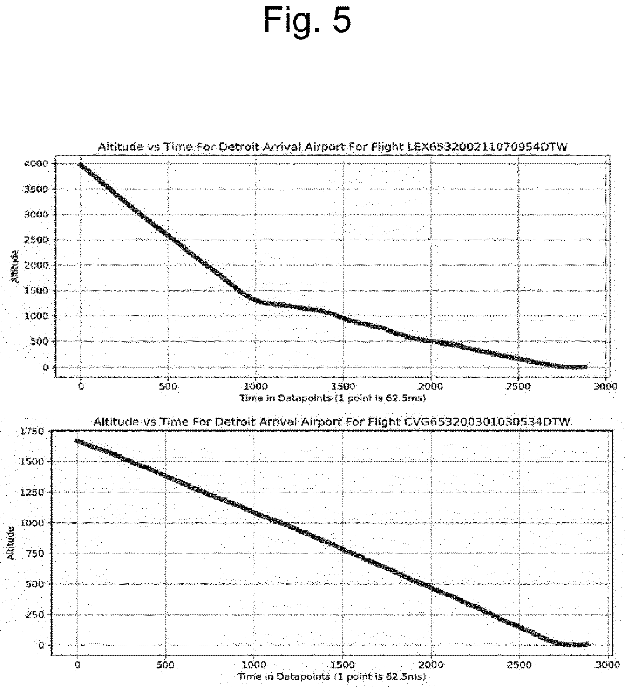

Figures 5 to 7 shows the recorded values of a number of flight parameters for the flight phases shown in Figure 4. The top graph in each figure shows the flight parameter value recorded in the anomalous phase. The bottom graph in each figure shows the flight parameter value recorded in the non-anomalous phase.

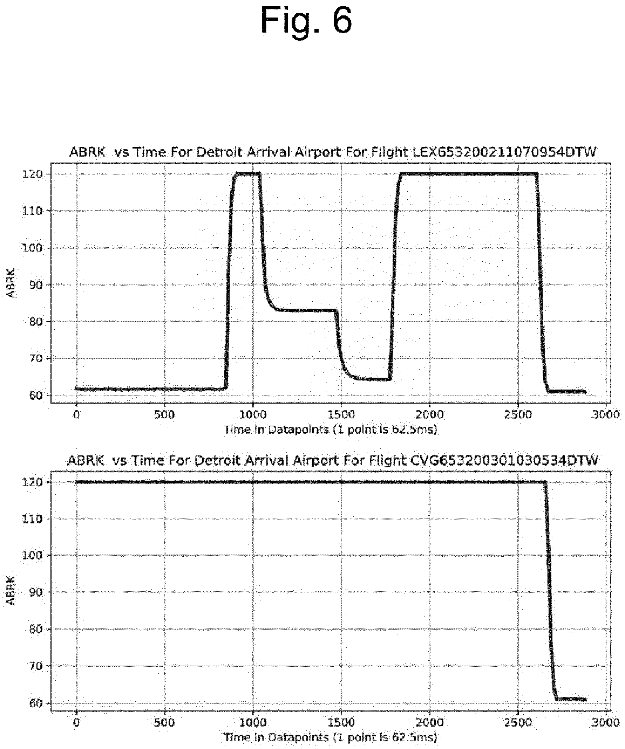

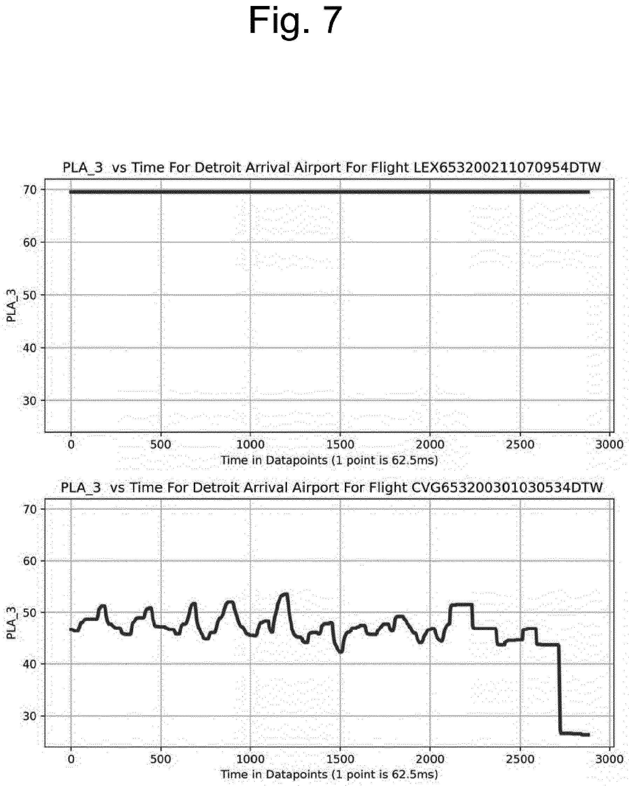

Figure 5 shows the altitude recorded in each phase. In comparison to the non-anomalous phase, in the anomalous phase the altitude is initially higher and decreases more steeply, before adopting a profile more similar to the non-anomalous phase after the 1000th flight data unit. This suggests the pilot began the approach at too high an altitude. Figure 6 shows the airbrake position recorded in each phase. A lower values indicates higher use of the airbrakes. The high use of airbrakes is shown at the beginning of the anomalous phase, but also after the 1000th flight data unit. This indicates a problem that may not be evident only from the recorded altitude because the high use continues after the altitude has been corrected. Figure 7 shows the power lever angle for engine 3 recorded in each phase. The constant value of the lever angle in the anomalous phase indicates a potential issue with engine 3, which could be responsible for the other anomalous behaviour of the system. Engine 3 on the aircraft that performed the flight including the anomalous phase could therefore investigated in further detail to identify and fix any malfunctions which may be causing the anomalous behaviour.

An output may be provided representing the identified one or more anomalous flight data units. In an arrangement, the output is output data comprising data identifying the one or more of the flight data units, phases of a flight, flights and flight parameters identified as anomalous. In an arrangement, the output is an alert indicating the one or more of the flight data units, phases of a flight, flights and flight parameters identified as anomalous by the method described herein.

In an arrangement, if the flight data units identified as anomalous are associated with a particular aircraft, that aircraft may be removed from service until the cause of the anomalous identification has been determined. This means that the aircraft will not make any further flights until the cause of the anomalous identification has been determined. Taking this action may reduce the chance of accidents occurring.

In an arrangement, a physical operation may be performed on the aircraft in response to flight data units associated with the aircraft being identified as anomalous. The physical operation may comprise one or more of performing maintenance on the aircraft, performing a repair on a component of the aircraft or replacing a component of the aircraft. The maintenance performed on the aircraft may be a standard inspection or servicing of the aircraft. In this case, the anomalous identification may result in the inspection or servicing being performed earlier than would be expected for the normal service routine of the aircraft. In an arrangement, the physical operation on the aircraft may be performed based on the flight parameter determined as responsible for the identification of one or more flight data units as anomalous. For example, the physical operation may be maintenance to a system of the aircraft relating to the flight parameter that is identified as responsible for the identification of particular flight data units as anomalous. For example, if the identified flight parameter is associated with the engines of the aircraft, engine maintenance may be performed to identify and fix any malfunctions in the engines that may be responsible for the anomalous behaviour.

In an arrangement, training for a pilot may be performed in response to flight data units associated with a flights performed by that pilot being identified as anomalous. The training may be based on the flight parameters identified as responsible for the identification of particular flight data units as anomalous. For example, if the descent angle of an approach performed by the pilot is determined to have been too steep, training on performing an appropriate approach may be provided to the pilot.

In an arrangement, the procedure associated with particular departure or arrival destinations may be modified in response to flight data units associated with the particular destination being identified as anomalous. For example, the procedure for take-off and/or landing for a particular airport may be modified.

After a change has been made in response to the identification of anomalous flight data units, the aircraft, pilot, departure or arrival destination or other common factor may be monitored and the method described above may be performed again to determine if the cause of the anomalous identification has been addressed.

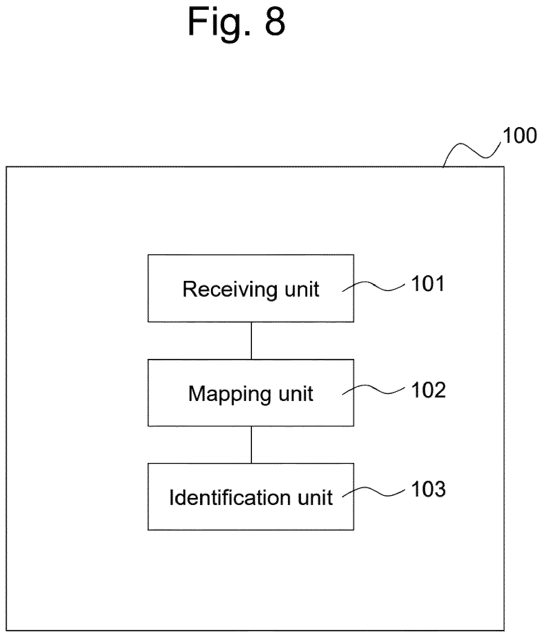

The method described above may be performed by a flight data analyzer 100. An example of a flight data analyzer 100 is shown in figure 8. The flight data analyzer 100 comprises a receiving unit 101 configured to receive a plurality of flight data units as described above, a mapping unit 102 configured to map the time series data of the flight data units to a multi-dimensional space, wherein each dimension of the multi-dimensional space corresponds to one of the plurality of flight parameters, and an identification unit 103 configured to use a grouping analysis performed on the mapped time series data as described above to identify one or more anomalous flight data units in the received plurality of flight data units. In an arrangement, the flight data analyzer 100 may further comprise a display. The flight data analyzer 100 may be configured to provide the output data or alert discussed above to a user via the display.

The flight data analyzer 100 may be located at a ground location, such as an airport or data processing center. To perform the analysis, flight data may be retrieved from the FDM system of one or more aircraft at regular intervals. For example, flight data may be retrieved at the end of each flight performed by an aircraft or when the aircraft is at a particular airport or hub. The analysis may be performed at regular intervals. In an arrangement, the analysis may be performed once a threshold number of flight data units have been received. In an arrangement, the analysis may be performed when flight data units associated with a threshold number of any one of aircraft, aircraft models, flight paths, or particular departure or arrival destinations has been reached.

A computer program may comprise instructions which, when executed by a computer system, instructs the computer system to perform the method described above. Such a computer program may be executed by the flight data analyzer 100. A computer-readable storage medium comprising instructions which, when executed by a computer, cause the computer to carry out the method described above. The flight data analyzer 100 may comprise such a computer-readable storage medium.

Examples of flight parameters that may be used in the methods described above are provided in the table below.

| **Parameter Name** | **Description** |
|---|---|
| ABRK | **A**ir **BR**a**K**e Position in Degrees. |
| AIL_1 | **AIL**eron Number **1** deflection angle in Degrees. |
| | Left (Port) Wing aileron surface. |
| AIL_2 | **AIL**eron Number **2** deflection angle in Degrees. |
| | Right (Starboard) Wing aileron surface |
| ALT | Pressure **ALT**itude measured in Feet. Aircraft flight altitude calibrated as per the pressure setting on the altimeter. |
| ALTR | **ALT**itude **R**ate measured in Feet/Minute. The rate of change in altitude. This indicates at what rate the aircraft is climbing or descending. |
| AOA1 | **A**ngle **of A**ttack sensor number 1. The angle of attack is the angle between the aircraft longitudinal axis and the aircraft flight path. |
| AOA2 | **A**ngle **of A**ttack sensor number 2. The angle of attack is the angle between the aircraft longitudinal axis and the aircraft flight path. |
| AOAC | **C**orrected **A**ngle **of A**ttack measured in Degrees. |
| AOAI | Indicated **A**ngle **of A**ttack measured in Degrees. |
| | This is the angle of attack indicated to the pilot after correcting for errors between **AOA1** and **AOA2.** |
| BAL1 | **B**arometrically Corrected **AL**titude 1. Altitude indicated to the pilot seated on the left based on QNH or QNE (some Airlines may also opt to use QFE) |
| BAL2 | **B**arometrically Corrected **AL**titude 2. Altitude indicated to the pilot seated on the right based on QNH or QNE (some Airlines may also opt to use QFE) |
| BLAC | **B**ody **L**ongitudinal **AC**celeration measured in g |
| CAS | **C**omputed **A**ir**S**peed measured in Knots. The airspeed indicated to the pilots on their airspeed indicator instruments |
| CASS | **S**elected **C**omputed **A**ir**S**peed. Pilot selected speed, when flying with speed in CAS, for the Auto Pilot |
| CTAC | **C**ross **T**rack **AC**celeration measured in g |
| DA | **D**rift **A**ngle measured in Degrees (DEG). This is equal to the Wind Correction Angle. It is the difference between the Magnetic/True Heading (MH/TH) and the Magnetic/True Track (TRKM/TRK). To fly the required track the aircraft corrects for wind drift by applying the Drift Angle to the Heading. This results in the heading to be flown to maintain the required track. |
| EGT_1 | Engine Number **1 E**xhaust **G**as **T**emperature. |
| | Very high **EGT** may indicate a problem. |
| EGT_2 | Engine Number **2 E**xhaust **G**as **T**emperature. |
| | Very high **EGT** may indicate a problem. |
| EGT_3 | Engine Number **3 E**xhaust **G**as **T**emperature. |
| | Very high **EGT** may indicate a problem. |
| EGT_4 | Engine Number **4 E**xhaust **G**as **T**emperature. |
| | Very high **EGT** may indicate a problem. |
| ELEV_1 | **ELEV**ator Number **1** deflection angle in Degrees. |
| | Left (Port) Tailplane elevator surface. |
| ELEV_2 | **ELEV**ator Number **2** deflection angle in Degrees. |
| | Right (Starboard) Tailplane elevator surface. |
| FF_1 | Engine Number **1 F**uel **F**low in Pounds per Hour (LBS/HR). |
| FF_2 | Engine Number **2 F**uel **F**low in Pounds per Hour (LBS/HR). |
| FF_3 | Engine Number **3 F**uel **F**low in Pounds per Hour (LBS/HR). |
| FF_4 | Engine Number **4 F**uel **F**low in Pounds per Hour (LBS/HR). |
| FLAP | Trailing Edge **FLAP** Position measured in counts. |
| | The BAE146/AVRO RJ Series has five flap positions 0°, 18°, 24°, 30° and 33° degrees. |
| FPAC | **F**light **P**ath **AC**celeration measured in g. This is the acceleration measured along the aircraft's flight path. Similar to **BLAC** but not projected out of the longitudinal axis of the aircraft but out of the actual aircraft flight path. |
| FQTY_1 | **F**uel **Q**uanti**TY** TANK **1** Left (Port) wing measured in Pounds (LBS). |
| FQTY_2 | **F**uel Quanti**TY** TANK **2** Right (Starboard) wing measured in Pounds (LBS). |
| FQTY_3 | **F**uel Quanti**TY** TANK **3** Centre Pannier Tanks (if installed) measured in Pounds (LBS). |
| FQTY_4 | **F**uel Quanti**TY** TANK **4** Centre Pannier Tanks (if installed) measured in Pounds (LBS). |
| GLS | **GL**ide Slope Deviation. It indicates the aircraft's vertical path relative to an ILS Glideslope. |
| GS | **G**round **S**peed in Knots. This is the actual speed of the aircraft over the Earth's surface after considering all external factors. |
| IVV | Inertial **V**ertical (**V**elocity) Speed in Feet/Minute. |
| | Similar to **ALTR** however the measurement is being performed by the Inertial Reference System (IRS) (Also known as INS - Inertial Navigation System). |
| LATG | **LAT**eral acceleration measured in g. The lateral axis is an imaginary line passing through the centre of the aircraft from port (left) to starboard (right) (normally from wing tip to wing tip). Accelerations about this axis affect the longitudinal stability (Pitch) of the aircraft. Pitch is controlled by the Elevators however as for **LONG** above external forces may also induce pitch |
| LGDN | **L**anding **G**ear **D**ow**N** Locked. |
| LONG | **LONG**itudinal acceleration measured in g. The longitudinal axis is an imaginary line passing from the nose to the tail of the aircraft. |
| | Accelerations about this axis affect the lateral stability (Roll) of the aircraft. Roll is controlled by the Ailerons however roll may also be induced by external forces. |
| MACH | **MACH** Number measured as a ratio of the Speed of Sound the measure is simply referred to as Mach. The airspeed in Mach Number as indicated to the pilots on their airspeed indicator instruments. |
| MH | **M**agnetic **H**eading measured in Degrees (DEG). |
| | This is where the aircraft's nose is pointing relative to Magnetic North. |
| MSQT_1 | **SQ**ua**T** switch left **(1) M**ain gear. It indicates if aircraft weight is on the left main gear wheel. |
| | Used to indicate how the aircraft took off or landed. |
| MSQT_2 | **SQuaT** switch right **(2) M**ain gear. It indicates if aircraft weight is on the right main gear wheel. |
| | Used to indicate how the aircraft took off or landed. |
| N1_1 | Engine Number **1** Fan **(N1)** speed in % RPM. Very low or 0% RPM during flight indicates a seized engine. |
| N1_2 | Engine Number **2** Fan **(N1)** speed in % RPM. Very low or 0% RPM during flight indicates a seized engine. |
| N1_3 | Engine Number **3** Fan **(N1)** speed in % RPM. Very low or 0% RPM during flight indicates a seized engine. |
| N1_4 | Engine Number **4** Fan **(N1)** speed in % RPM. Very low or 0% RPM during flight indicates a seized engine. |
| N1C | **N1** Command. Autothrottle commands an N1 RPM for all engines based on the autothrottle mode to maintain the required thrust. |
| N1T | Selected Engine **N1 T**arget RPM. Pilot selected engine N1 Target (applies to all engines) to be maintained by the autothrottle system. |
| N2_1 | Engine Number **1** Core **(N2)** speed in % RPM. |
| | Very low or 0% RPM during flight indicates a seized engine. |
| N2_2 | Engine Number **2** Core **(N2)** speed in % RPM. |
| | Very low or 0% RPM during flight indicates a seized engine. |
| N2_3 | Engine Number **3** Core **(N2)** speed in % RPM. |
| | Very low or 0% RPM during flight indicates a seized engine. |
| N2_4 | Engine Number **4** Core **(N2)** speed in % RPM. Very low or 0% RPM during flight indicates a seized engine. |
| OIP_1 | Engine Number **1 OI**l **P**ressure. Measured in Pounds per Square Inch (PSI). Low oil pressure or excessively high oil pressure during flight may indicate an engine problem. |
| OIP_2 | Engine Number **2 OI**l **P**ressure. Measured in Pounds per Square Inch (PSI). Low oil pressure or excessively high oil pressure during flight may indicate an engine problem. |
| OIP_3 | Engine Number **3 OI**l **P**ressure. Measured in Pounds per Square Inch (PSI). Low oil pressure or excessively high oil pressure during flight may indicate an engine problem. |
| OIP_4 | Engine Number **4 OI**l **P**ressure. Measured in Pounds per Square Inch (PSI). Low oil pressure or excessively high oil pressure during flight may indicate an engine problem. |
| OIT_1 | Engine Number **1 OI**l **T**emperature. Measured in Degrees (DEG) Celsius. |
| OIT_2 | Engine Number **2 OI**l **T**emperature. Measured in Degrees (DEG) Celsius. |
| OIT_3 | Engine Number **3 OI**l **T**emperature. Measured in Degrees (DEG) Celsius. |
| OIT_4 | Engine Number **4 OI**l **T**emperature. Measured in Degrees (DEG) Celsius. |
| PLA_1 | **P**ower **L**ever **A**ngle for engine number **1** |
| PLA_2 | **P**ower **L**ever **A**ngle for engine number **2** |
| PLA_3 | **P**ower **L**ever **A**ngle for engine number **3** |
| PLA_4 | **P**ower **L**ever **A**ngle for engine number **4** |
| PTCH | **PiTCH** angle measured in Degrees. The Angle between the Horizon and the aircraft longitudinal axis. |
| PTRM | **P**itch **TRiM** Position. Measured in Degrees. |
| RALT | **R**adio **ALT**itude measured in Feet. This is a very sensitive instrument which is activated when in close proximity to the Earth's surface, typically within 5000 Feet. This instrument gives very accurate height above terrain information during Take-Off and Landing. |
| ROLL | Aircraft **ROLL** Angle in Degrees. The roll angle caused by the displacement of the ailerons and/or external environmental factors. |
| RUDD | **RUDDer** deflection angle in Degrees. 0 degrees is the centre position and -ve and +ve values determine the deflection left or right. |
| RUDP | **RUD**der **P**edal Position. Indicates yaw inputs measured in counts. |
| SPL_1 | Roll **SP**oi**L**er **1** deflection angle in Degrees. Left (Port) Wing spoiler surface. |
| SPL_2 | Roll **SP**oi**L**er **1** deflection angle in Degrees. Right (Starboard) Wing spoiler surface. |
| TAS | **T**rue **A**ir**S**peed measured in Knots. Actual aircraft speed through the air. |
| TH | **T**rue **H**eading measured in Degrees (DEG). This is where the aircraft's nose is pointing relative to True North. |
| TRK | **TR**ac**K** Angle True measured in Degrees (DEG). This is the aircraft's track over the Earth's surface relative to True North. |
| TRKM | **TRacK** Angle **M**agnetic measured in Degrees (DEG). This is the aircraft's track over the Earth's surface relative to Magnetic North. |
| VRTG | **V**e**RT**ical acceleration measured in g. The vertical axis is an imaginary line passing through the centre of the aircraft (usually situated between the wings) from the top to the bottom of the aircraft. Accelerations about this axis affect the directional stability (Yaw) of the aircraft. Yaw is controlled by the Rudder however as for **LONG** above external forces may also induce yaw. |

The flow charts and descriptions thereof herein should not be understood to prescribe a fixed order of performing the method steps described therein. Rather, the method steps may be performed in any order that is practicable.

Methods and processes described herein can be embodied as code (e.g., software code) and/or data. Such code and data can be stored on one or more computer-readable media, which may include any device or medium that can store code and/or data for use by a computer system. When a computer system reads and executes the code and/or data stored on a computer-readable medium, the computer system performs the methods and processes embodied as data structures and code stored within the computer-readable storage medium. In certain embodiments, one or more of the steps of the methods and processes described herein can be performed by a processor (e.g., a processor of a computer system or data storage system).

It should be appreciated by those skilled in the art that computer-readable media include removable and non-removable structures/devices that can be used for storage of information, such as computer-readable instructions, data structures, program modules, and other data used by a computing system/environment. A computer-readable medium includes, but is not limited to, volatile memory such as random access memories (RAM, DRAM, SRAM); and non-volatile memory such as flash memory, various read-only-memories (ROM, PROM, EPROM, EEPROM), magnetic and ferromagnetic/ferroelectric memories (MRAM, FeRAM), and magnetic and optical storage devices (hard drives, magnetic tape, CDs, DVDs); network devices; or other media now known or later developed that is capable of storing computer-readable information/data. Computer-readable media should not be construed or interpreted to include any propagating signals.

### Detailed Example

Further details of an example implementation are given below.

Accidents during the approach and landing phase accounts for more than 50% of all the accidents, even though this phase is only 16% of the flight time. For the present example, the approach and landing phase were selected for study. In this phase, only three minutes before touchdown were studied to detect anomalous flights. The touchdown point for each aircraft was identified using Phase (PH), Weight on Wheels (WOW), Latitude (LAT) and Longitude (LONG) flight parameters. To avoid negative values of flight parameter Altitude (ALT) for a given airport, the minimum altitude value for that airport was subtracted from all readings of ALT flight parameter. In this way all the flight landings at a given airport were synchronized in time with each other to touch down at same time.

The data set was cleaned of any noise or missing data by the onboard sensor. All flight parameters were normalized to accommodate different units and range of values of flight parameters. The data files were converted from MAT files to SQL tables for better access and analysis. Flight parameters were recorded at sampling rate ranging from 1 Hertz to 16 Hertz. Parameters sampled at lower rates were converted to 16 Hertz by interpolating the values. This was done to match the total number of data points for all the parameters for synchronization purposes.

In the LOF algorithm, parameter k is the neighborhood size which defines the neighborhood of a data point for the computation of its local density. In principle, the value of k should be lower bounded by the minimum number of points in a cluster while the upper bound should be the maximum number of nearest points that can potentially be anomalies. However, such information is generally not available and highly domain dependent. Even if such information is available, the optimal k value between the lower bound and upper bound is still undefined. A range of k values is suggested as one value of k cannot be generalized over various datasets with diverse underlying data distribution. Aviation data is a time series based multidimensional data. The dimensions typically run into thousands. Data being of higher dimensions, heterogeneously unstructured and having diverse underlying distributions makes the process of determining optimal value of k more challenging.

A small value of k is not preferred as the algorithm becomes sensitive to noise and a too large value will not detect local anomalies. There cannot be one definite value for k in finding the anomalous flights as each dataset given will be unique in number of total flights (samples) and number of flight parameters. As such there are no pre-defined statistical methods to find the most optimal value of k. In the present example, before implementing LOF algorithm the optimal k value was determined by calculating the LOF score values for each possible k value. Selecting k above 10 should help to remove unwanted statistical fluctuations. In the aviation domain it is typically difficult to fix a lower bound for k as we do not know how many minimum similar objects a cluster will have (other objects can be outliers relative to this cluster), or we do not know the exact number of normal flights. Similarly, we also cannot decide the total number of anomalous flights in each dataset and hence the upper bound for k cannot be fixed. Since the algorithm in this example uses unsupervised learning, we do not have labelled data or know in advance the normal or abnormal flights; as a consequence, k can take a wide range of possible numbers. For every k value we see the LOF score calculated. The k value which gives the highest LOF score may be selected as the optimal k value. The k value corresponding to the highest LOF score is chosen to catch the instance at which the object is the most outlying. The lowest LOF score is not chosen as it will erase the outlying nature of an object completely.

Distance measure is another important parameter of the LOF algorithm. Choosing the right type of distance measure is important. Euclidean distance was not chosen as the distance measure because as the dimensionality increases, the curse of dimensionality impacts Euclidean distance measure. In case of flight data there are 132 parameters recorded at different time steps. The dimensions run into thousands. Cosine similarity as the distance measure is suitable for high dimensional datasets. But the disadvantage with this measure is that it ignores the magnitude of vectors and only considers their direction. Therefore, the difference in values may not be considered which are important to detect anomalous flights.

The Manhattan distance was chosen to find the optimal value of k as it calculates the distance between real valued vectors. This helps to capture the k value where a data point is most outlying. More importantly flight data has both discrete and binary attributes. For instance, flight parameters like landing gear, weight on wheels has only values as 0 or 1. Using Manhattan as the distance measure helps in this scenario as it considers the paths that realistically could be taken within values of such attributes. Manhattan distance measure is fast as compared to Euclidean distance as for each pair of distance calculation, there is no need for squaring or taking square roots to get absolute values.

As an example, Minneapolis airport is taken. There are in total 200 flights in a dataset arriving at this airport. We calculate LOF score for all possible k values between 10 and 180. The k value which gives the highest LOF score will the optimal one. In this case k value of 41 is the most optimal as it has the highest LOF score of 1.62. The left side of the Figure 9 gives the plot for the LOF score and possible k values between 10 and 180. From the plot it can be seen that the highest LOF value is in between k value of 25 & 55. Also, in between this range only k value stabilises before decreasing. The highest LOF score is between k values 40 and 45. The highlighted box of the Figure 9 highlights that the highest LOF score is at k value of 41. Therefore 41 is the optimal k value for this case.

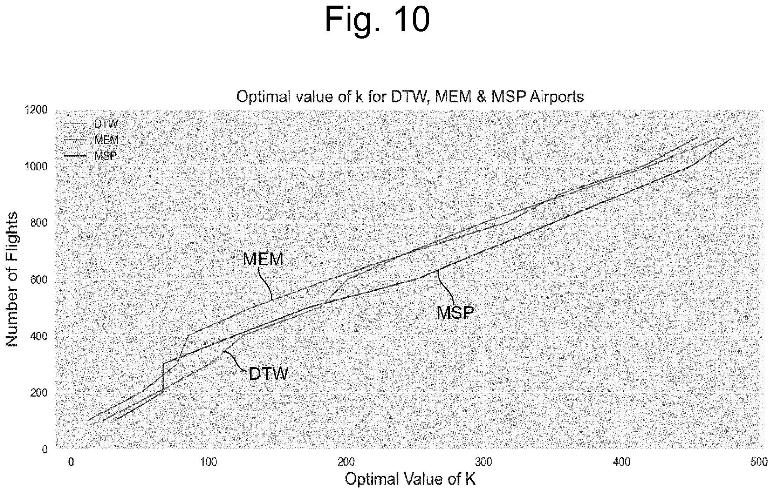

For the purpose of comparison, Figure 10 shows the line plot comparing the optimal k values for three airports Detroit, Minneapolis and Memphis. The optimal k value is for different total number of flights arriving at each airport. It has been suggested previously that a suitable setting of k value should satisfy k =√N , for the datasets with a sample size N which is larger than 100. However, such a setting has been found to be unsuitable for flight data under this study. In case of detection of anomalous flights, this general rule is not valid due to the nature of aviation data. As discussed above, better performance is achieved by allowing dynamic variation in the value of k, dependent for example on total number of fights and the arrival airport.

Based on the optimal k value identified and Manhattan as the distance measure, LOF score for each flight with the same tail number approaching same airport is calculated. As a rule of thumb, any flight with LOF score greater than one may be considered anomalous. All such flights may need to be investigated further. Investigating all flights satisfying this criterion is a laborious process and requires a lot of human effort. Setting up a threshold can help to further filter the flight data units and/or flights which have score greater than one but are still normal. The following explains in detail an example approach for selecting the threshold.

As discussed above, any data point 'A' deep inside a cluster (dense region) having density comparable to its neighbors or higher than its neighbors will be an inlier. The LOF score of such point A will be = 1 or < 1. Points with LOF value > 1 may be labelled as outliers. Such points may be near the periphery of the cluster or dense region (LOF value slightly greater than 1) or far outside the cluster (LOF value significantly greater than 1). In practice, how far a point should be from a cluster of points (dense region) to be truly considered an outlier (i.e., truly anomalous) may vary from application to application. It is therefore desirable to provide a method for calculating a threshold above which a point can be categorized as anomalous. This threshold will define how far a point should be from a cluster of points (dense region) to be categorized as an outlier.

Defining this threshold is to an extent dependent on the field of application. For instance, in life sciences even points with LOF values close to 1 are of interest for further investigations. In this field it is acceptable to have more false positives, whereas false negatives may not be tolerated. While discussing results with aviation experts, the inventors came across many flights having LOF values greater than 1 but which in practice fit under the standard operating procedures and pose no threat to safety. So, to decrease false positives, a method for fine tuning the LOF threshold value was desired. The upper limit of LOF value greater than 1 but which could still safely be a normal flight was to be determined as a threshold. Deciding this threshold with feedback from human expert is not only a laborious process but also introduces human bias. It was also found that this threshold will change for each group of flights and for each arrival airport. To decide this threshold, statistical methods such as the z score method, Bell curve method, Tukey's method and median method were explored.

Tukey's test was chosen for the present example as it is distribution independent. Tukey's (1977) method, constructing a boxplot, is a simple graphical tool to display information about continuous univariate data, such as the median, lower quartile, upper quartile, lower extreme, and upper extreme of a data set. It is less sensitive to extreme values of the data because it uses quartiles which are resistant to extreme values. The rules of the method are as follows:
The IQR (Inter Quartile Range) is the distance between the lower (Q1) and upper (Q3) quartiles.

Inner fences are located at a distance 1.5 IQR below Q1 and above Q3 as given by: $\left[Q1-\left(1.5*IQR\right),Q3+\left(1.5*IQR\right)\right]$

Outer fences are located at a distance 3 IQR below Q1 and above Q3 as given by: $\left[Q1-\left(3*IQR\right),Q3+\left(3*IQR\right)\right]$

A value between the inner and outer fences is a possible outlier. An extreme value beyond the outer fences is a probable outlier. For the detection of anomalous flights inner fences are considered.

Figure 11 shows group of 103 flights from the same tail number arriving at the same airport. On x-axis LOF scores are plotted and on y-axis flight count is plotted. Out of 103 flights, 66 flights have their LOF score greater than 1. Analyzing all these 66 flights is very time consuming. As per Tukey's rule of inner fence mentioned above, the threshold comes to LOF value of 1.1690. There are now only five flights which are greater than this threshold. These are the real outliers. Figure 12 shows the threshold analysis of three different arrival airports. For each airport flights from the same tail number were taken and then after calculating LOF scores, threshold was fixed as explained above. For each case a threshold of LOF score was established as per Tukey's rule. Figure 12 shows that for each airport, threshold is dynamic and stabilizes after certain value.

Having established the threshold for our flight data, the following section shows how additional information may be inferred.

In this step, further plots were plotted to get more insight into the flights. These plots included LOF scores and flight parameters at each time stamp during the flight. Furthermore, flight parameters responsible for the anomalous behaviour were identified and plotted. To find parameters responsible for the anomalous behaviour of any anomalous flight, the mean of all flight parameters for all normal flights were calculated. Then for each flight parameter of the anomalous flight the value of each flight parameter was subtracted from the mean value of that parameter of all normal flights. This was done to get the flight parameter that was furthest away from the mean value of the same flight parameter of normal flights. In this way top n flight parameters which may be responsible for the anomalous behaviour can be found which are further away from the mean values of those n parameters of normal flights. These plots are discussed in detail in the following section.

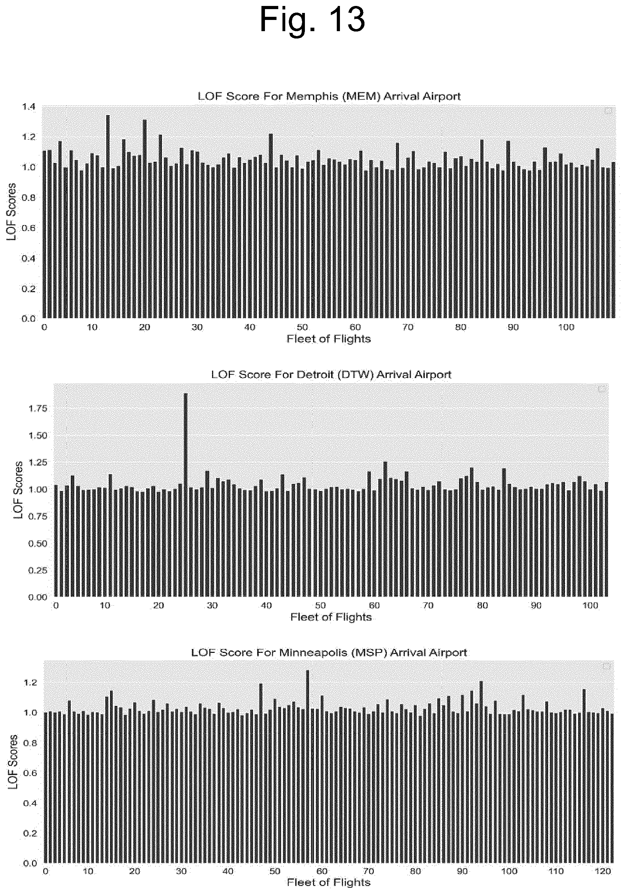

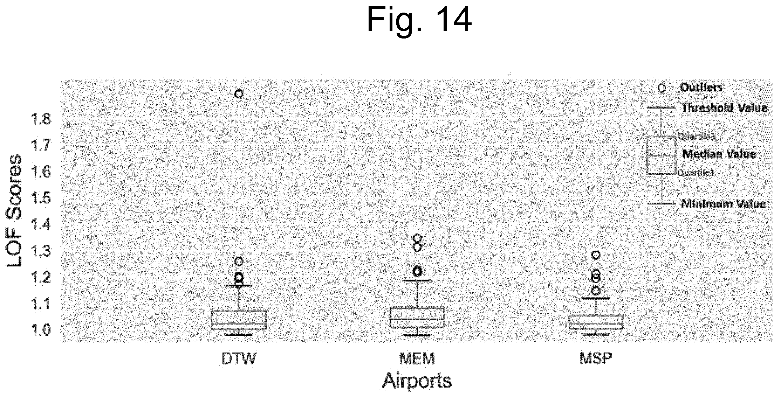

A set of flights with the same tail number was analyzed for three different airports and the LOF score of each set is plotted in Figure 13. From Figure 13 the LOF score of each flight in the set can be seen for three different airports and highly abnormal flights can be seen from the bar chart. Figure 14 combines the LOF algorithm and the Tukey's method for threshold calculation. It shows how for each of the three different airports the LOF threshold is different and dynamic. This plot also shows the median LOF values for each airport and the anomalous flights as outliers for each airport. Detroit (DTW) airport is taken as a case study. From Figure 11 and Figure 14 we can see that DTW has five flights as outlier. One flight with the LOF score of 1.86 is an extreme outlier.

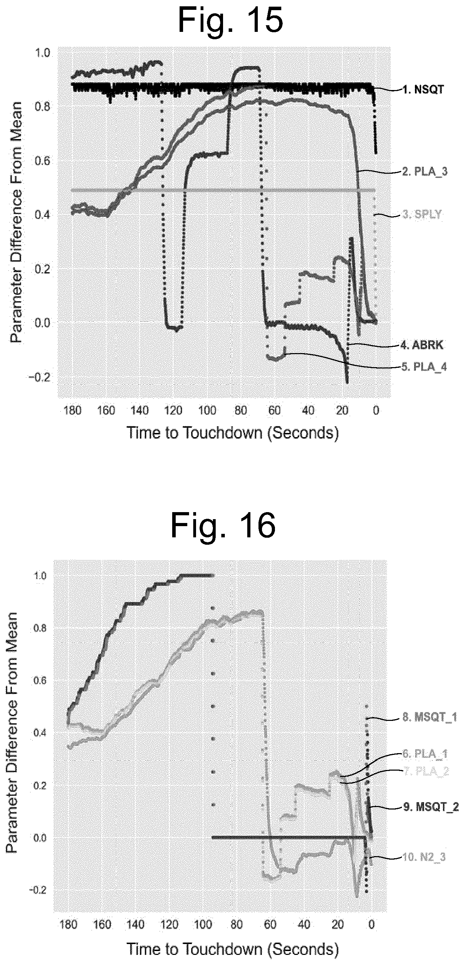

Plots of parameter difference from a mean can be created for a top N flight parameters responsible for the anomalous behaviour. In such plots, the flight duration can be plotted on the x-axis and on the y-axis abnormal flight parameters can be plotted in the order of how far they were from normal flight parameters. Examples of such plots are shown in Figures 15 and 16 for the present example, with the top 5 flight parameters (1-5) shown in Figure 15 and the next 5 flight parameters (6-10) shown in Figure 16. Such plots support investigation into what might have caused a flight to be abnormal. From discussions with the human expert, it was concluded that this flight may have been highly anomalous due to flight parameter ABRK (Air Brakes). Frequent use of air brakes to slow down the aircraft just before touch down may have caused this anomalous behaviour. Similar analyses were done for the remaining four anomalous flights and many flight parameters like engine vibrations, high speed, and pitch were found to be some of the contribution factors behind the anomalous behaviour.

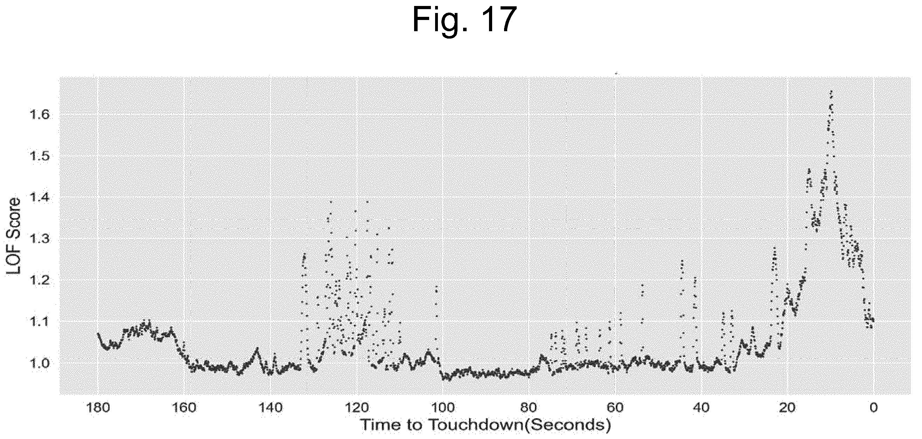

Figure 17 shows changing LOF value at each time stamp during the last three minutes of the landing phase. This figure shows how the LOF values change in time as the flight is about to touchdown. The figure shows that the flight became anomalous just 20 seconds before the touchdown. This plot for any flight can be used to find the time window when this flight was anomalous and to what extent was flight anomalous. We found that many flights were anomalous during approach and landing phase, but these flights became normal while touching down. So, any normal flights can also be investigated to check for any instance where these flights might have become anomalous.

These results were verified and validated by the industry expert. Flights labelled anomalous for each airport were also anomalous as per the human expert. Tukey's method reduced the number of false positives; however there were still some false positives which were labelled anomalous but from aviation point of view were normal. For example, a change in the route to approach might be a normal procedure on a busy day of air traffic but such change was detected as an anomalous behaviour by the proposed method.

## Claims

1. A computer implemented method of identifying anomalous flight data, the method comprising:
receiving (11) a plurality of flight data units in a time series from each of a plurality of different flights, wherein each flight data unit comprises a value for each of a plurality of flight parameters at the same time point;
mapping (12) the flight data units as respective data points to a multi-dimensional space, wherein the dimensions of the multi-dimensional space comprise a dimension for each of the plurality of flight parameters; and
identifying (14) one or more anomalous flight data units in the received plurality of flight data units by applying (13) a local outlier factor algorithm to the mapped flight data units, the method further comprising preprocessing the received plurality of flight data units prior to the mapping the flight data units to the multi-dimensional space, the preprocessing comprising synchronizing the flight data units such that flight data units having the same time point from different flights will correspond to the same portion of each flight, wherein the relative proportions of the values for each of the plurality of flight parameters are maintained during preprocessing so that the steps of mapping (12) the flight data units as respective data points to a multi-dimensional space and identifying (14) one or more anomalous flight data units in the received plurality of flight data units are performed on values that are directly proportional to the respective values of the received plurality of flight data units.

2. The method of claim 1, wherein the dimensions of the multi-dimensional space further comprise a time dimension to represent the time series of each plurality of flight data units, optionally wherein the time dimension is defined relative to a common reference time point in the flight paths of the plurality of flights.

3. The method of any preceding claim, wherein the local outlier factor algorithm comprises comparing each of one or more of the flight data units with flight data units from other flights recorded at a corresponding time point or time window in those flights, the time point or time window being defined relative to a reference time point in the respective flight path.

4. The method of claim 2 or 3, wherein the reference time point comprises a reference point defined relative to a characteristic feature of one of the following phases of the flight: take-off, initial climb, cruise, approach, descent and landing.

5. The method of any preceding claim, wherein the local outlier factor algorithm is used to calculate an outlier score for each of the plurality of flight data units, wherein a flight data unit is identified as anomalous when the outlier score of the flight data unit derived by the local outlier factor algorithm deviates from a normal value by more than a predetermined value, wherein:
the local outlier factor algorithm is configured to determine a spatial variation of a local density of the data points in the multi-dimensional space; and
the outlier score is calculated for each flight data unit based on a position of the data point corresponding to the flight data unit relative to the determined spatial variation of local density, wherein the predetermined value is calculated based on a statistical distribution of the calculated outlier scores.

6. The method of claim 5, wherein the predetermined value is calculated such that outlier scores higher than a calculated threshold are identified as anomalous, the calculated threshold being equal to the sum of
a value of a predetermined percentile of the distribution; and
a predetermined percentile range multiplied by a predetermined factor, optionally wherein the predetermined percentile is a first quartile or a third quartile and/or wherein the predetermined percentile range is the interquartile range and/or wherein the predetermined factor is in the range of 1 to 2, optionally substantially equal to 1.5.

7. The method of any of claims 5 to 6, wherein the calculated threshold is calculated based on a statistical distribution over the calculated outlier scores of a subset of the data points, the subset of data points corresponding to a predetermined category, such as a predetermined type of aircraft, a predetermined phase of flight, or involvement of a predetermined airport and/or, comprising receiving further flight data units, calculating new outlier scores corresponding to those flight data units, and updating the calculated threshold to take account of the new outlier scores.

8. The method of any of claims 5 to 7, wherein the determination of the spatial variation of the local density of the data points is performed based on distances between data points and nearest neighbours of the data points, wherein the local density of each data point is defined using a distance between the data point and a k-th nearest neighbour of the data point, where k is an integer, wherein:
the local outlier factor algorithm is applied a plurality of times using a plurality of different values of *k;*
the method comprises selecting a value of *k* that achieves higher than average or maximal outlier scores; and
the method comprises using the selected value of *k* to perform the identifying of the one or more anomalous flight data units.

9. The method of any of claims 5 to 8, comprising calculating an average outlier score of at least one of the following phases of at least one of the plurality of flights: take-off, initial climb, cruise, approach, descent or landing, wherein the average outlier score is calculated using the outlier score of each of the flight data units recorded at a time point falling within the said phase, wherein for each phase of the flight, that phase is identified as anomalous when the average outlier score of the said phase deviates from a normal value by more than a predetermined value and/or comprising calculating an average outlier score of the group of flight data units corresponding to at least one of the plurality of different flights, wherein the at least one of the plurality of different flights is identified as anomalous when the average outlier score of said flight deviates from a normal value by more than a predetermined value.

10. The method of any preceding claim, wherein for at least one of the different flights the outlier score is determined for each of a plurality of different flight data units in a time series of flight data units received for that flight and/or wherein the method is performed at a ground location and/or further comprising providing an output representing the identified one or more anomalous flight data units.

11. The method of any preceding claim, comprising performing further analysis (15) to determine at least one of the flight parameters as responsible for the identification of one or more flight data units as anomalous.

12. A method of maintaining an aircraft, the method comprising:
determining at least one flight parameter as responsible for the identification of one or more flight data units as anomalous according to the method of claim 11; and
performing a physical operation on the aircraft based on the determined at least one flight parameter.

13. A flight data analyzer (100), the flight data analyzer (100) comprising:
a receiving unit (101) configured to receive a plurality of flight data units in a time series from each of a plurality of different flights, wherein each flight data unit comprises a value for each of a plurality of flight parameters at the same time point;
a mapping unit (102) configured to map the flight data units as respective data points to a multi-dimensional space, wherein the dimensions of the multi-dimensional space comprise a dimension for each of the plurality of flight parameters; and
an identification unit (103) configured to identify one or more anomalous flight data units in the received plurality of flight data units by applying a local outlier factor algorithm to the mapping flight data units, wherein the received plurality of flight data units are preprocessed prior to the mapping the flight data units to the multi-dimensional space, the preprocessing comprising synchronizing the flight data units such that flight data units having the same time point from different flights will correspond to the same portion of each flight, wherein the relative proportions of the values for each of the plurality of flight parameters are maintained during preprocessing so that the steps of mapping the flight data units as respective data points to a multi-dimensional space and identifying one or more anomalous flight data units in the received plurality of flight data units are performed on values that are directly proportional to the respective values of the received plurality of flight data units.

14. A computer program comprising instructions which, when executed by a computer system, instructs the computer system to perform the method of any one of claims 1 to 12.

15. A computer-readable storage medium comprising instructions which, when executed by a computer, cause the computer to carry out the method of any one of claims 1 to 12.

## Patentansprüche

1. Computerimplementiertes Verfahren zum Erkennen anomaler Flugdaten, wobei das Verfahren umfasst:
Empfangen (11) einer Vielzahl von Flugdateneinheiten in einer Zeitreihe von jedem einer Vielzahl verschiedener Flüge, wobei jede Flugdateneinheit einen Wert für jeden einer Vielzahl von Flugparametern zu demselben Zeitpunkt umfasst;
Abbilden (12) der Flugdateneinheiten als jeweilige Datenpunkte in einen mehrdimensionalen Raum, wobei die Dimensionen des mehrdimensionalen Raums jeweils eine Dimension für jeden der mehreren Flugparameter umfassen; und
Identifizieren (14) einer oder mehrerer anomaler Flugdateneinheiten in der empfangenen Vielzahl von Flugdateneinheiten durch Anwenden (13) eines Algorithmus für lokale Ausreißerfaktoren auf die abgebildeten Flugdateneinheiten, wobei das Verfahren ferner das Vorverarbeiten der empfangenen Vielzahl von Flugdateneinheiten vor dem Abbilden der Flugdateneinheiten in den mehrdimensionalen Raum umfasst, wobei die Vorverarbeitung das Synchronisieren der Flugdateneinheiten umfasst, so dass Flugdateneinheiten mit demselben Zeitpunkt aus verschiedenen Flügen demselben Abschnitt jedes Fluges entsprechen, wobei die relativen Anteile der Werte für jeden der mehreren Flugparameter während der Vorverarbeitung beibehalten werden, so dass die Schritte des Abbildens (12) der Flugdateneinheiten als jeweilige Datenpunkte auf einen mehrdimensionalen Raum und des Identifizierens (14) einer oder mehrerer anomaler Flugdateneinheiten in der empfangenen Vielzahl von Flugdateneinheiten auf Werten durchgeführt werden, die direkt proportional zu den jeweiligen Werten der empfangenen Vielzahl von Flugdateneinheiten sind.

2. Verfahren nach Anspruch 1, wobei die Dimensionen des mehrdimensionalen Raums ferner eine Zeitdimension umfassen, um die Zeitreihe jeder Vielzahl von Flugdateneinheiten darzustellen, optional wobei die Zeitdimension relativ zu einem gemeinsamen Referenzzeitpunkt in den Pfaden der Vielzahl von Flügen definiert ist.

3. Verfahren nach einem der vorhergehenden Ansprüche, wobei der Algorithmus für den lokalen Ausreißerfaktor den Vergleich jeder der einen oder mehreren Flugdateneinheiten mit Flugdateneinheiten aus anderen Flügen umfasst, die zu einem entsprechenden Zeitpunkt oder in einem entsprechenden Zeitfenster in diesen Flügen aufgezeichnet wurden, wobei der Zeitpunkt oder das Zeitfenster relativ zu einem Referenzzeitpunkt im jeweiligen Pfad definiert ist.

4. Verfahren nach Anspruch 2 oder 3, wobei der Referenzzeitpunkt einen Referenzpunkt umfasst, der relativ zu einem charakteristischen Merkmal einer der folgenden Flugphasen definiert ist: Start, Anfangssteigflug, Reiseflug, Anflug, Sinkflug und Landung.

5. Verfahren nach einem der vorhergehenden Ansprüche, wobei der lokale Ausreißerfaktor-Algorithmus verwendet wird, um für jede der zahlreichen Flugdateneinheiten einen Ausreißerwert zu berechnen, wobei eine Flugdateneinheit als anomal identifiziert wird, wobei der durch den lokalen Ausreißerfaktor-Algorithmus abgeleitete Ausreißerwert der Flugdateneinheit um mehr als einen vorbestimmten Wert von einem Normalwert abweicht, wobei:
der Algorithmus für den lokalen Ausreißerfaktor so konfiguriert ist, dass er eine räumliche Variation einer lokalen Dichte der Datenpunkte im mehrdimensionalen Raum bestimmt; und
der Ausreißerwert für jede Flugdateneinheit basierend auf einer Position des der Flugdateneinheit entsprechenden Datenpunkts relativ zu der bestimmten räumlichen Variation der lokalen Dichte berechnet wird, wobei der vorbestimmte Wert basierend auf einer statistischen Verteilung der berechneten Ausreißerwerte berechnet wird.

6. Verfahren nach Anspruch 5, wobei der vorbestimmte Wert so berechnet wird, dass Ausreißerwerte, die höher sind als ein berechneter Schwellenwert, als anomal identifiziert werden, wobei der berechnete Schwellenwert gleich der Summe aus
einem Wert eines vorbestimmten Perzentils der Verteilung; und
einem vorbestimmten Perzentilbereich, multipliziert mit einem vorbestimmten Faktor, ist, wobei optional das vorbestimmte Perzentil ein erstes Quartil oder ein drittes Quartil ist und/oder wobei der vorbestimmte Perzentilbereich der Interquartilsabstand ist und/oder wobei der vorbestimmte Faktor im Bereich von 1 bis 2 liegt, optional im Wesentlichen gleich 1,5 ist.

7. Verfahren nach einem der Ansprüche 5 bis 6, wobei der berechnete Schwellenwert basierend auf einer statistischen Verteilung über die berechneten Ausreißerwerte einer Teilmenge der Datenpunkte berechnet wird, wobei die Teilmenge der Datenpunkte einer vorbestimmten Kategorie entspricht, wie beispielsweise einem vorbestimmten Flugzeugtyp, einer vorbestimmten Flugphase oder der Beteiligung eines vorbestimmten Flughafens und/oder, das Empfangen weiterer Flugdateneinheiten, das Berechnen neuer Ausreißerwerte, die diesen Flugdateneinheiten entsprechen, und das Aktualisieren des berechneten Schwellenwerts unter Berücksichtigung der neuen Ausreißerwerte umfasst.

8. Verfahren nach einem der Ansprüche 5 bis 7, wobei die Bestimmung der räumlichen Variation der lokalen Dichte der Datenpunkte basierend auf Abständen zwischen Datenpunkten und den nächsten Nachbarn der Datenpunkte durchgeführt wird, wobei die lokale Dichte jedes Datenpunkts unter Verwendung eines Abstands zwischen dem Datenpunkt und einem k-ten nächsten Nachbarn des Datenpunkts definiert wird, wobei k eine ganze Zahl ist, wobei:
der Algorithmus für den lokalen Ausreißerfaktor mehrmals unter Verwendung einer Vielzahl verschiedener Werte von k angewendet wird;
das Verfahren die Auswahl eines Wertes von k umfasst, der überdurchschnittliche oder maximale Ausreißerwerte erzielt; und
das Verfahren die Verwendung des ausgewählten Wertes von k umfasst, um die Identifizierung der einen oder mehreren anomalen Flugdateneinheiten durchzuführen.

9. Verfahren nach einem der Ansprüche 5 bis 8, das umfasst: Berechnen eines durchschnittlichen Ausreißerwerts für mindestens eine der folgenden Phasen mindestens eines der Vielzahl von Flügen: Start, Anfangssteigflug, Reiseflug, Anflug, Sinkflug oder Landung, wobei der durchschnittliche Ausreißerwert unter Verwendung des Ausreißerwerts jeder der Flugdateneinheiten berechnet wird, die zu einem Zeitpunkt innerhalb der jeweiligen Phase aufgezeichnet wurden, wobei für jede Flugphase diese Phase als anomal identifiziert wird, wenn der durchschnittliche Ausreißerwert der Phase um mehr als einen vorbestimmten Wert von einem Normalwert abweicht und/oder Berechnen eines durchschnittlichen Ausreißerwerts der Gruppe von Flugdateneinheiten, die mindestens einem der zahlreichen verschiedenen Flüge entsprechen, wobei der mindestens eine der zahlreichen verschiedenen Flüge als anomal identifiziert wird, wenn der durchschnittliche Ausreißerwert des Fluges um mehr als einen vorbestimmten Wert von einem Normalwert abweicht.

10. Verfahren nach einem der vorhergehenden Ansprüche, wobei für mindestens einen der verschiedenen Flüge der Ausreißerwert für jede einer Vielzahl verschiedener Flugdateneinheiten in einer Zeitreihe von für diesen Flug empfangenen Flugdateneinheiten bestimmt wird und/oder wobei das Verfahren an einem Standort am Boden durchgeführt wird und/oder ferner das Bereitstellen einer Ausgabe umfasst, die die eine oder mehreren identifizierten anomalen Flugdateneinheiten darstellt.

11. Verfahren nach einem der vorhergehenden Ansprüche, das das Durchführen einer weiteren Analyse (15) umfasst, um mindestens einen der Flugparameter zu bestimmen, der für die Identifizierung einer oder mehrerer Flugdateneinheiten als anomal verantwortlich ist.

12. Verfahren zur Wartung eines Flugzeugs, wobei das Verfahren umfasst:
Bestimmen mindestens eines Flugparameters, der für die Identifizierung einer oder mehrerer Flugdateneinheiten als anomal verantwortlich ist, gemäß dem Verfahren nach Anspruch 11; und
Durchführen einer physischen Maßnahme am Flugzeug basierend auf dem bestimmten mindestens einen Flugparameter.

13. Flugdatenanalysator (100), wobei der Flugdatenanalysator (100) umfasst:
eine Empfangseinheit (101), die so konfiguriert ist, dass sie eine Vielzahl von Flugdateneinheiten in einer Zeitreihe von jedem einer Vielzahl verschiedener Flüge empfängt, wobei jede Flugdateneinheit einen Wert für jeden einer Vielzahl von Flugparametern zu demselben Zeitpunkt umfasst;
eine Abbildungseinheit (102), die so konfiguriert ist, dass sie die Flugdateneinheiten als jeweilige Datenpunkte in einen mehrdimensionalen Raum abbildet, wobei die Dimensionen des mehrdimensionalen Raums jeweils eine Dimension für jeden der mehreren Flugparameter umfassen; und
eine Identifizierungseinheit (103), die so konfiguriert ist, dass sie eine oder mehrere anomale Flugdateneinheiten in der empfangenen Vielzahl von Flugdateneinheiten identifiziert, indem sie einen Algorithmus für lokale Ausreißerfaktoren auf die abgebildeten Flugdateneinheiten anwendet, wobei die empfangene Vielzahl von Flugdateneinheiten vor der Abbildung der Flugdateneinheiten in den mehrdimensionalen Raum vorverarbeitet wird, wobei die Vorverarbeitung das Synchronisieren der Flugdateneinheiten umfasst, so dass Flugdateneinheiten mit demselben Zeitpunkt aus verschiedenen Flügen demselben Abschnitt jedes Fluges entsprechen, wobei die relativen Anteile der Werte für jeden der mehreren Flugparameter während der Vorverarbeitung beibehalten werden, so dass die Schritte des Abbildens der Flugdateneinheiten als jeweilige Datenpunkte auf einen mehrdimensionalen Raum und des Identifizierens einer oder mehrerer anomaler Flugdateneinheiten in der empfangenen Vielzahl von Flugdateneinheiten auf Werten durchgeführt werden, die direkt proportional zu den jeweiligen Werten der empfangenen Vielzahl von Flugdateneinheiten sind.

14. Computerprogramm, das Anweisungen umfasst, die, wenn sie von einem Computersystem ausgeführt werden, das Computersystem anweisen, das Verfahren nach einem der Ansprüche 1 bis 12 durchzuführen.

15. Computerlesbares Speichermedium, das Anweisungen umfasst, die, wenn sie von einem Computer ausgeführt werden, den Computer veranlassen, das Verfahren nach einem der Ansprüche 1 bis 12 durchzuführen.

## Revendications

1. Procédé mis en œuvre par ordinateur d'identification de données de vol anormales, le procédé comprenant :
la réception (11) d'une pluralité d'unités de données de vol en série temporelle à partir de chacun d'une pluralité de vols différents, dans lequel chaque unité de données de vol comprend une valeur pour chacun d'une pluralité de paramètres de vol au même point temporel ;
la cartographie (12) des unités de données de vol en tant que points de données respectifs dans un espace pluridimensionnel, dans lequel les dimensions de l'espace pluridimensionnel comprennent une dimension pour chacun de la pluralité de paramètres de vol ; et
l'identification (14) d'une ou de plusieurs unités de données de vol anormales dans la pluralité d'unités de données vol reçue par l'application (13) d'un algorithme de facteur de valeur aberrante local aux unités de données de vol cartographiées, le procédé comprenant en outre le prétraitement de la pluralité d'unités de données de vol reçue avant la cartographie des unités de données de vol dans l'espace pluridimensionnel, le prétraitement comprenant la synchronisation des unités de données de vol de telle sorte que des unité de données de vol ayant le même point temporel issues de vols différents correspondent à la même portion de chaque vol, dans lequel les proportions relatives des valeurs pour chacun de la pluralité de paramètres de vol sont maintenues pendant le prétraitement de sorte que les étapes de la cartographie (12) des unités de données de vol en tant que points de données respectifs dans un espace pluridimensionnel et l'identification (14) d'une ou de plusieurs unités de données de vol anormales dans la pluralité d'unités de données de vol reçue sont réalisées sur des valeurs qui sont directement proportionnelles aux valeurs respectives de la pluralité d'unité de données de vol reçue.

2. Procédé selon la revendication 1, dans lequel les dimensions de l'espace pluridimensionnel comprennent en outre une dimension temporelle pour représenter la série temporelle de chacune de la pluralité d'unités de données de vol, éventuellement dans lequel la dimension temporelle est définie par rapport à un point temporel de référence commun dans les trajets de vols de la pluralité de vols.

3. Procédé selon l'une quelconque des revendications précédentes, dans lequel l'algorithme de facteur de valeur aberrante local comprend la comparaison de chacune des une ou plusieurs unité de données de vol avec des unités de données de vol issues d'autres vols enregistrées à un point temporel correspondant ou une fenêtre temporelle correspondantes dans ces vols, le point temporel ou la fenêtre temporelle étant défini(e) par rapport à un point temporel de référence dans le trajet de vol respectif.

4. Procédé selon la revendication 2 ou 3, dans lequel le point temporel de référence comprend un point de référence défini par rapport à une particularité caractéristique de l'une des phases suivantes du vol : décollage, montée initiale, croisière, approche, descente et atterrissage.

5. Procédé selon l'une quelconque des revendications précédentes, dans lequel l'algorithme de facteur de valeur aberrante est utilisé pour calculer un score de valeur aberrante pour chacune de la pluralité d'unités de données de vol, dans lequel une unité de données de vol est identifiée comme anormale lorsque le score de valeur aberrante de l'unité de données de vol dérivé par l'algorithme de facteur de valeur aberrante local s'écarte d'une valeur normale de plus d'une valeur prédéterminée, dans lequel :
l'algorithme de facteur de valeur aberrante local est configuré pour déterminer une variation spatiale d'une densité locale des points de données dans l'espace pluridimensionnel ; et
le score de valeur aberrante est calculé pour chaque unité de données de vol sur la base d'une position du point de données correspondant à l'unité de données de vol par rapport à la variation spatiale de densité locale déterminée, dans lequel la valeur prédéterminée est calculée sur la base d'une distribution statistique des scores de valeur aberrante calculés.

6. Procédé selon la revendication 5, dans lequel la valeur prédéterminée est calculée de telle sorte que des scores de valeur aberrante supérieurs à un seuil calculé sont identifiés comme anormaux, le score calculé étant égal à la somme
d'une valeur d'un centile prédéterminé de la distribution ; et
d'une plage de centile prédéterminée multipliée par un facteur prédéterminé, éventuellement dans lequel le centile prédéterminé est un premier quartile ou un troisième quartile et/ou dans lequel la plage de centile prédéterminée est la plage interquartile et/ou dans lequel le facteur prédéterminé est dans la plage de 1 à 2, éventuellement sensiblement égal à 1,5.

7. Procédé selon l'une quelconque des revendications 5 et 6, dans lequel le seuil calculé est calculé sur la base d'une distribution statistique sur les scores de valeur aberrante calculés d'un sous-ensemble des points de données, le sous-ensemble de points de données correspondant à une catégorie prédéterminée, telle qu'un type d'aéronef prédéterminé, une phase de vol prédéterminée, ou une implication d'un aéroport prédéterminé et/ou, comprenant la réception d'autres unité de données de vol, le calcul de nouveaux scores de valeur aberrante correspondant à ces unités de données de vol, et la mise à jour du seuil calculé pour tenir compte des nouveaux scores de valeur aberrante.

8. Procédé selon l'une quelconque des revendications 5 à 7, dans lequel la détermination de la variation spatiale de la densité locale des points de données est réalisée sur la base de distances entre des points de données et des plus proches voisins des points de données, dans lequel la densité locale de chaque point de données est définie à l'aide d'une distance entre le point de données et le *k*-ième plus proche voisin du point de données, où *k* est un nombre entier, dans lequel :
l'algorithme de facteur de valeur aberrante local est appliqué une pluralité de fois à l'aide d'une pluralité de valeurs différentes de *k* ;
le procédé comprend la sélection d'une valeur de *k* qui obtient mieux que les scores de valeur aberrante moyen ou maximal ; et
le procédé comprend l'utilisation de la valeur sélectionnée de *k* pour réaliser l'identification des une ou plusieurs unités de données de vol anormales.

9. Procédé selon l'une quelconque des revendications 5 à 8, comprenant le calcul d'un score de valeur aberrante moyen d'au moins l'une des phases suivante d'au moins l'un de la pluralité de vols : décollage, montée initiale, croisière, approche, descente ou atterrissage, dans lequel le score de valeur aberrante moyen est calculé à l'aide du score de valeur aberrante de chacune des unités de données de vol enregistrées à un point temporel se trouvant dans ladite phase, dans lequel pour chaque phase du vol, cette phase qui est identifiée comme anormale lorsque le score de valeur aberrante moyen de ladite phase s'écarte d'une valeur normale de plus d'une valeur prédéterminée et/ou comprenant le calcul d'une score de valeur aberrante moyen du groupe d'unités de données de vol correspondant à au moins l'un de la pluralité de vols différents, dans lequel l'au moins un de la pluralité de vols différents est identifié comme anormal lorsque le score de valeur aberrante moyen dudit vol s'écarte d'une valeur normale de plus d'une valeur prédéterminée.

10. Procédé selon l'une quelconque des revendications précédentes, dans lequel pour au moins l'un des vols différents le score de valeur aberrant est déterminé pour chacune de la pluralité d'unités de données de vol dans une série temporelle d'unités de données de vol reçue pour ce vol et/ou dans lequel le procédé est réalisé à un emplacement au sol et/ou comprenant en outre la fourniture d'une sortie représentant les une ou plusieurs unités de données de vol anormales identifiées.

11. Procédé selon l'une quelconque des revendications précédentes, comprenant la réalisation d'une autre analyse (15) pour déterminer au moins l'un des paramètres de vol comme responsable de l'identification d'une ou de plusieurs unités de données de vol comme anormales.

12. Procédé de maintenance d'un aéronef, le procédé comprenant :
la détermination d'au moins un paramètre de vol comme responsable de l'identification d'une un de plusieurs unités de données de vol comme anormales selon le procédé de la revendication 11 ; et
la réalisation d'une opération physique sur l'aéronef sur la base de l'au moins un paramètre de vol déterminé.

13. Analyseur de données de vol (100), l'analyseur de données de vol (100) comprenant :
une unité de réception (101) configurée pour recevoir une pluralité d'unités de données de vol en série temporelle à partir de chacun d'une pluralité de vols différents, dans lequel chaque unité de données de vol comprend une valeur pour chacun d'une pluralité de paramètres de vol au même point temporel ;
une unité de cartographie (102) configurée pour cartographier les unités de données de vol en tant que points de données respectifs dans un espace pluridimensionnel, dans lequel les dimensions de l'espace pluridimensionnel comprennent une dimension pour chacun de la pluralité de paramètres de vol ; et
une unité d'identification (103) configurée pour identifier une ou plusieurs unités de données de vol anormales dans la pluralité d'unités de données vol reçue par l'application d'un algorithme de facteur de valeur aberrante local aux unités de données de vol cartographiées, dans lequel la pluralité d'unités de données de vol reçue sont prétraitées avant la cartographie des unités de données de vol dans l'espace pluridimensionnel, le prétraitement comprenant la synchronisation des unités de données de vol de telle sorte que des unité de données de vol ayant le même point temporel issues de vols différents correspondent à la même portion de chaque vol, dans lequel les proportions relatives des valeurs pour chacun de la pluralité de paramètres de vol sont maintenues pendant le prétraitement de sorte que les étapes de la cartographie des unités de données de vol en tant que points de données respectifs dans un espace pluridimensionnel et l'identification d'une ou de plusieurs unités de données de vol anormales dans la pluralité d'unités de données de vol reçue sont réalisées sur des valeurs qui sont directement proportionnelles aux valeurs respectives de la pluralité d'unité de données de vol reçue.

14. Programme d'ordinateur comprenant des instructions qui, lorsqu'elles sont exécutées par un système d'ordinateur, ordonnent au système d'ordinateur de réaliser le procédé de l'une quelconque des revendications 1 à 12.

15. Support de stockage lisible par ordinateur comprenant des instructions qui, lorsqu'elles sont exécutées par un ordinateur, amènent l'ordinateur à effectuer le procédé de l'une quelconque des revendications 1 à 12.
